# EUROPEAN PATENT APPLICATION

(11) **EP 4 773 637 A1**
(43) Date of publication of application: **08.07.2026**
(21) Application number: 26150008.6
(22) Date of filing: 02.01.2026
(51) Int. Cl.: H04W 4/70, H04L 1/16, H04W 74/0833, H04W 28/04

(54) **METHOD AND DEVICE FOR TRANSCEIVING DATA**

(30) Priority: 02.01.2025 KR 20250000558; 09.09.2025 KR 20250128646; 18.12.2025 KR 20250203371
(71) Applicant: KT Corporation, Seongnam-si, Gyeonggi-do 13606 (KR)
(72) Inventor: HONG, Sung-pyo, 13606 Seongnam-si, Gyeonggi-do (KR)
(74) Representative: BCKIP Part mbB

(57) **Abstract**

Provided are a method and device for transmitting and receiving data in a wireless communication system. The device transmits an ambient internet of things (A-IoT) message 1 in a random access procedure and receives a first A-IoT message 2 in the random access procedure in response to the A-IoT message 1. Further, after receiving the first A-IoT message 2, the device transmits a D2R message including upper layer data in the random access procedure. When a second A-IoT message 2 that is separate from the first A-IoT message 2 is received, retransmission of the D2R message is performed.

## Description

### CROSS-REFERENCE TO RELATED THE APPLICATION

This application is based on and claims priority on Patent Application No. 10-2025-0000557 filed on Jan. 2, 2025, No. 10-2025-0128645 filed on Sep. 9, 2025 and No. 10-2025-0203369 filed on Dec. 18, 2025 in the Korean Intellectual Property Office, the disclosures of which are incorporated by reference herein in their entirety.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios classified as Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure provides a method and device for transmitting and receiving data of a device that offers ultra-low complexity and ultra-low power operation in a wireless communication system.

According to an embodiment, a method of a device may be provided for transmitting and receiving data in a wireless communication system. The method of the device may include transmitting an ambient internet of things (A-IoT) message1 in a random access procedure, receiving a first A-IoT message2 in the random access procedure in response to the A-IoT message1, and after receiving the first A-IoT message2, transmitting a device to reader (D2R) message including upper layer data in the random access procedure, wherein, when a second A-IoT message2 that is separate from the first A-IoT message2 is received, retransmission of the D2R message is performed.

According to another embodiment, a device may be provided for processing data in a wireless communication system. The terminal may include at least one processor; and at least one memory configured to store instructions and operably electrically connectable to the at least one processor, wherein operations performed based on the instructions executed by the at least one processor include: transmitting an ambient internet of things (A-IoT) message1 in a random access procedure, receiving a first A-IoT message2 in the random access procedure in response to the A-IoT message1, and after receiving the first A-IoT message2, transmitting a device to reader (D2R) message including upper layer data in the random access procedure, wherein, when a second A-IoT message2 that is separate from the first A-IoT message2 is received, retransmission of the D2R message is performed.

After receiving the first A-IoT message2, the device may store an access stratum Identifier (AS ID), and the first A-IoT message2 may include the AS ID.

Meanwhile, the second A-IoT message2 may include an AS ID identical to the stored AS ID. That is, when the second A-IoT message2 including the AS ID identical to the stored AS ID is received, retransmission of the D2R message may be performed.

In addition, the second A-IoT message2 may include a 16-bit random identifier, D2R scheduling information, an access stratum identifier (AS ID), and information indicating whether the AS ID is included.

As one example, when the above-described features are applied, the second A-IoT message2 may indicate a reception failure of the transmitted D2R message.

Before transmitting the A-IoT message1, the device may receive a paging message in the random access procedure, and the paging message may include 1-bit information indicating contention-based random access. Further, the paging message may further include information indicating whether a security parameter is included.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7B illustrate examples of connectivity topologies for an ambient IoT network and a device.
FIG. 8 illustrates an example of a procedure for an A-IoT inventory service.
FIG. 9 illustrates an example of an access stratum (AS) procedure between an A-IoT device and a reader.
FIGS. 10A to 10B illustrate A-IoT access procedures to which one embodiment of the present specification may be applied.
FIG. 11 is a block diagram showing apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

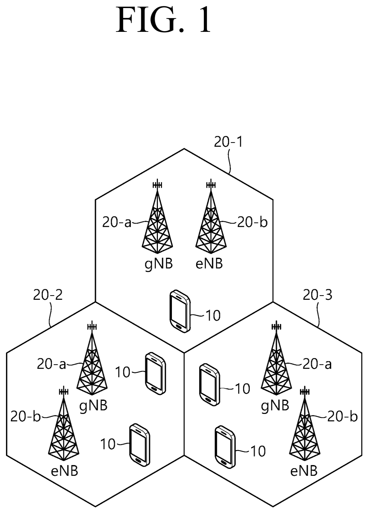

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

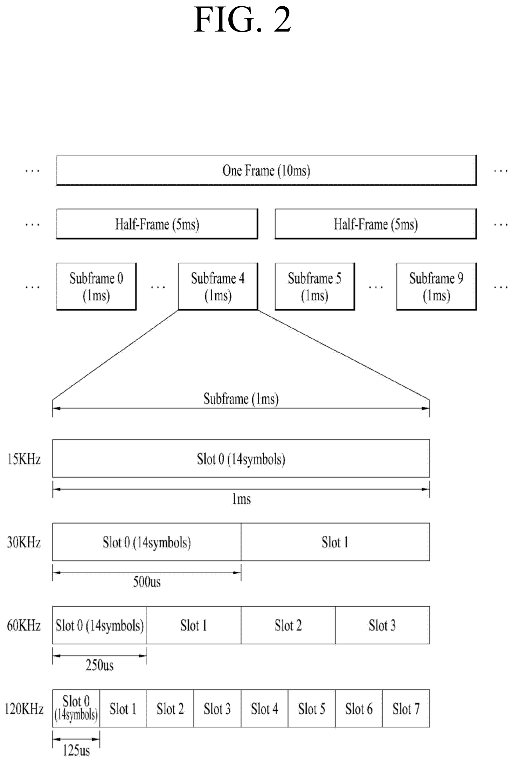

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | ₁₀ | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

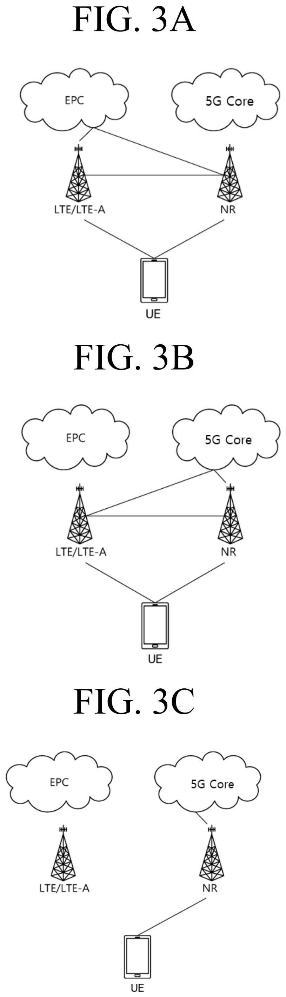

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

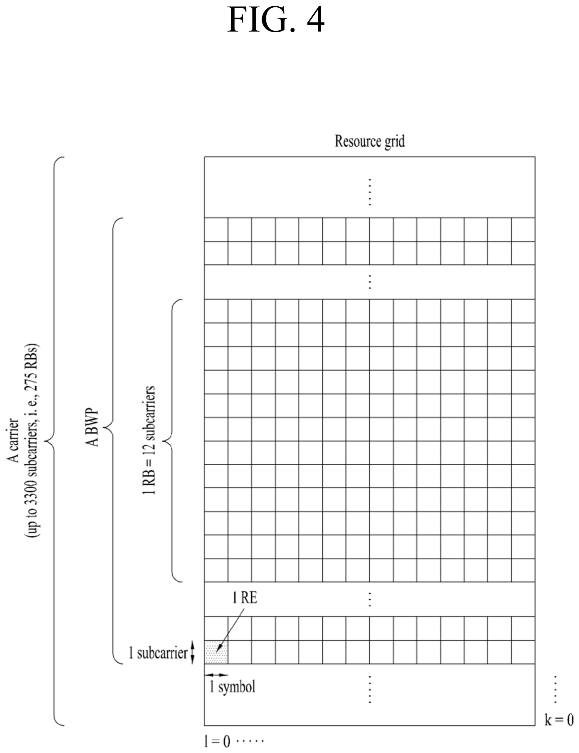

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

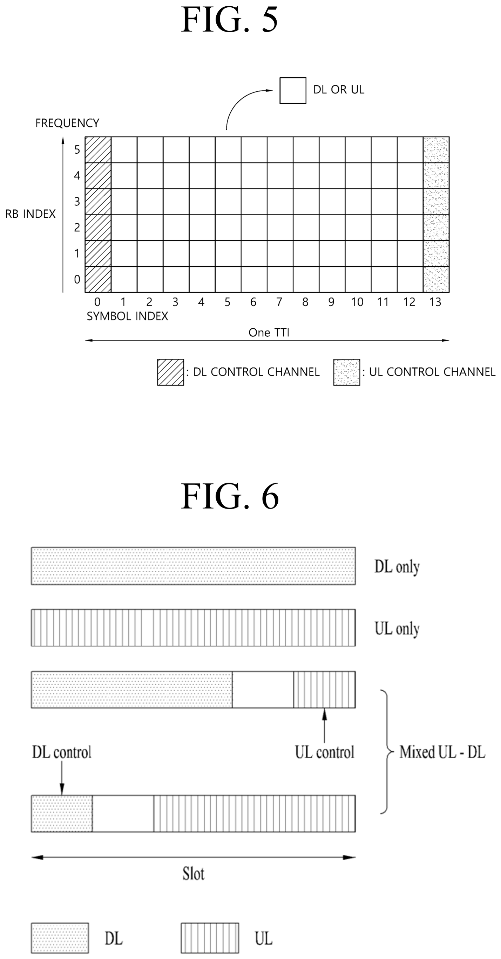

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

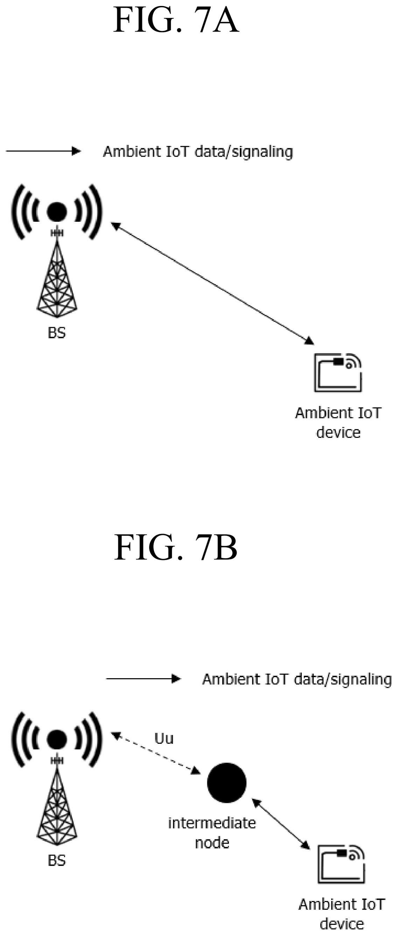

**FIGS. 7A to 7B** **illustrate examples of connectivity topologies for an ambient IoT network and a device.**

An ambient Internet of Things (ambient Internet of Things or ambient power-enabled Internet of Things: A-IoT/AloT) device is an IoT device powered by energy harvesting and having no battery or having limited energy storage capability (for example, using a capacitor). For convenience of description, an AIoT device may hereinafter be referred to as a device. This is merely for convenience of description, and the name may be changed to any other term.

Energy is provided through energy harvesting from radio waves, light, motion, heat, or other suitable power sources. Energy harvesting may be continuous (for example, by vibration) or may occur intermittently. Accordingly, it cannot be assumed that an AIoT device always has power available for data transmission and reception.

An AIoT device needs to be designed to have lower complexity, smaller size, reduced capability, and lower power consumption than previously defined 3GPP IoT terminals/devices (for example, NB-IoT (Narrowband Internet of Things) or eMTC (enhanced Machine Type Communication) devices). An AIoT device may be designed to have a lifetime of more than 10 years without maintenance. Accordingly, AIoT devices may replace existing 3GPP IoT devices or support various use cases (for example, inventory, sensors, positioning, and commands) that cannot be supported by existing 3GPP IoT devices.

Functions and procedures for supporting ambient IoT use cases may be defined as AIoT services (for example, an inventory service and a command service). For example, a main purpose of the inventory service is to search for goods (for example, boxes, containers, packages, or tools) present in a specific area. When a request is transmitted within a network for a specific area, AIoT devices attached to such goods report identifiers associated with the goods, and additional information such as status, measurement results, and/or location may be added by the AIoT devices and/or an AIoT RAN (Radio Access Network)/reader. Through the inventory service, AIoT devices within a predetermined range of a specific reader may be discovered and/or tracked.

A command service represents a procedure for executing commands for AIoT devices located in a specific area. The commands may include, for example, read, write, disable, and/or enable services.
- Read: a request to read information from an AIoT device.
- Write: a request to write information to an AIoT device.
- Disable: a request to permanently or temporarily disable an RF transmission capability of an AIoT device.
- Enable: a request to enable an AIoT device that has been temporarily disabled.

Connectivity topologies such as those shown in FIGS. 7A to 7B may be defined for an ambient Internet of Things (AIoT) network and devices. In FIG. 7A, a BS represents an ambient IoT Radio Access Network (RAN). The AIoT RAN represents a node that performs specific functions for AIoT as part of a functional split between a Radio Access Network (RAN) and a Core Network (CN), for example, a RAN node function that includes control of A-IoT radio resources used by an A-IoT device. The AIoT RAN may serve one or more AIoT readers. An AIoT reader represents a reader that terminates an AIoT protocol with an AIoT device. For convenience of description, the node may hereinafter be referred to as an AIoT RAN (or an AIoT reader). This is merely for convenience of description, and the node may be denoted by any other term, such as an AIoT RAN reader, an AIoT base station, or an AIoT BS reader.

In all of these topologies, a carrier may be provided to an AIoT device from another node inside or outside the topology. Links in each topology may be bidirectional or unidirectional. In FIG. 7A, an AIoT device communicates directly and bidirectionally with a base station. Communication between the base station and the AIoT device may include AIoT data and/or signaling. A base station that transmits to the AIoT device and a base station that receives from the AIoT device may be the same base station or may be different base stations.

In FIG. 7B, an AIoT device performs bidirectional communication with an AIoT RAN via an intermediate node/assisting node/assisting UE. In this topology, the intermediate node/assisting node/assisting UE may be a relay, an integrated access and backhaul (IAB) node, a UE, a repeater, or the like, which is capable of ambient IoT functions and/or services. For convenience of description, the node may hereinafter be referred to as a UE reader. This is merely for convenience of description, and the node may be denoted by any other term, such as a UE connected to or associated with an AloT-enabled RAN, an AIoT-enabled RAN/reader, an AIoT reader, or an AIoT UE reader.

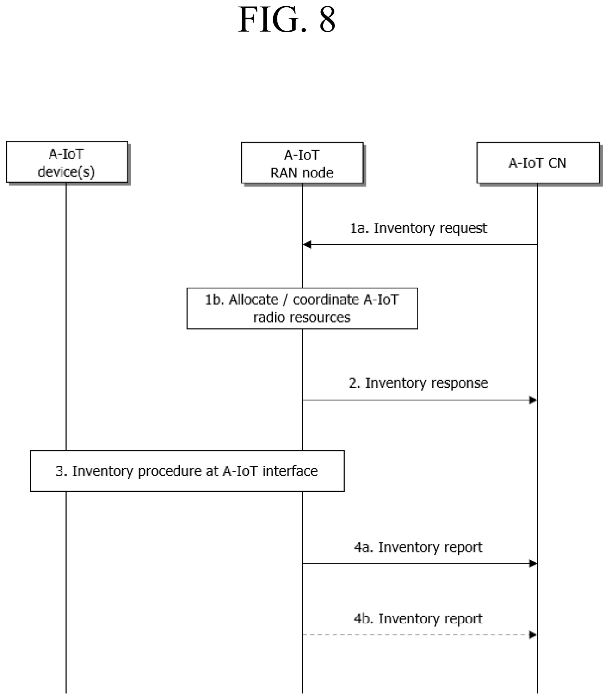

**FIG. 8** **illustrates an example of a procedure for an A-IoT inventory service.**

With reference to FIG. 8, a procedure for an AIoT inventory service is described below.
1a. The A-IoT CN sends an inventory request message to an A-IoT RAN node.
1b. The A-IoT RAN node allocates and coordinates usage of A-IoT radio resources.
2. The A-IoT RAN node sends an inventory response message to the A-IoT CN.
3. The A-IoT RAN node performs an inventory procedure toward one or more A-IoT devices over an A-IoT radio interface.
4a/4b. After receiving inventory results from the one or more A-IoT devices, the A-IoT RAN node may transmit one or more inventory reports to the A-IoT CN, the inventory reports including the received inventory results.

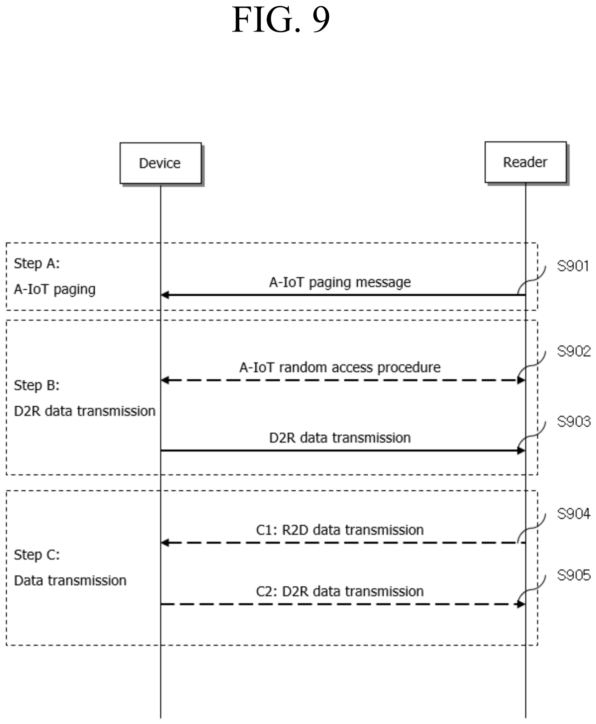

**FIG. 9** **illustrates an example of an access stratum (AS) procedure between an A-IoT device and a reader.**

With reference to FIG. 9, an overall access stratum (AS) procedure between an ambient Internet of Things (A-IoT) device and a reader is described below.

### Step A: A-IoT Paging (S901)

Based on a service request, the reader transmits an A-IoT paging message indicating one or more devices that are required to respond. In this case, the A-IoT paging message may be used interchangeably with an initial trigger message.

### Step B: D2R (Device-to-Reader) Data Transmission (S902-S903)

One or more A-IoT devices triggered by the paging perform transmission of a device identity (ID) to the reader by performing an A-IoT random access procedure or without performing the A-IoT random access procedure. Thereafter, D2R data is transmitted to the reader.

### Step C1: R2D (Reader-to-Device) Data Transmission (S904)

A possible R2D data transmission is performed, for example, for transmitting a command.

### Step C2: D2R Data Transmission (S905)

A possible D2R data transmission is performed, for example, for transmitting a corresponding response to the command.

As such, although a high-level procedure for providing an inventory service or a command service has been defined, because detailed operations the lack of detailed operation between an AIoT device and an AIoT RAN/reader for supporting an A-IoT service has prevented effective implementation of an A-IoT service. In particular, methods for transmitting and receiving R2D/D2R data between an AIoT device and an AIoT RAN/reader that consider AIoT characteristics have not been provided.

In providing an AIoT technology for supporting lower complexity, a smaller size, reduced capability, and lower power consumption compared to existing 3GPP Low-Power Wide-Area (LPWA) IoT, a method for handling a failure during a signaling/data transmission and reception process between an AIoT device and an AIoT RAN/reader is not provided.

To address these problems, the present disclosure proposes a method and an apparatus thereof for effectively considering and handling transmission success and failure of an AIoT device during a signaling/data transmission and reception process between the AIoT device and an AIoT RAN/Reader.

Hereinafter, data transmission and reception methods based on 5GS (Fifth Generation System) and NR technologies are described in detail. However, this is merely for convenience of description, and the present disclosure may be applied based on any system or any radio access technology (for example, 6G). Embodiments described in the present disclosure may refer to information elements and operation details specified in NR/5GS standards (for example, TS 38.321 as an NR MAC specification, TS 38.331 as an NR RRC specification, and TS 23.501 as a system architecture specification). Even if definitions of such information elements and related terminal operations are not described in the present disclosure, corresponding contents specified in standard specifications as well-known technologies may be included in the present disclosure.

Any function described below may be defined as an individual terminal capability (for example, a UE radio capability or a UE core network capability) and may be transmitted by a terminal to a base station or a core network entity (for example, an AMF (Access and Mobility Management Function), an SMF (Session Management Function), or an AIoTNF (Ambient IoT Network Function)) through corresponding signaling. Alternatively, multiple functions may be combined or aggregated and defined as a terminal capability and may be transmitted by the terminal to the base station or the core network entity through corresponding signaling. Herein, an Ambient IoT Function (AIoTF) represents a network function for providing management and control of AIoT services and AIoT operations. This is merely for convenience of description, and the name may be changed to any other term. The AIoTF may select an AIoT RAN node (or a UE reader). The AIoTF may receive an AIoT service request from an application function or an application server and trigger an AIoT RAN/reader (or an AIoT UE reader) to perform AIoT device operations and AIoT service operations. The AIoTF may collect AIoT service operation results from the AIoT RAN node (or the AIoT UE reader) and transmit the collected results to the application function or the application server.

An ambient IoT device may be classified and defined into at least one device type or category according to at least one supported capability or a combination of at least one capability. For example, according to an energy storage capacity, devices may be classified into a device having no energy storage, a device having an energy storage capacity up to a specific value (up to E1 Joules), and a device having an energy storage capacity up to another specific value (up to E2 Joules, where E2 > E1). As another example, devices may be classified into a device having no energy storage and no independent signal generation or amplification (for example, backscatter transmission) (hereinafter referred to as Device A for convenience of description), a device having an energy storage unit but no independent signal generation (for example, backscatter transmission) (hereinafter referred to as Device B for convenience of description), wherein use of stored energy in Device B may include amplification of a reflected signal, and a device having an energy storage unit and independent signal generation (for example, active RF components for transmission) (hereinafter referred to as Device C for convenience of description). As another example, devices may be classified into a device having approximately 1 µW peak power consumption, having energy storage, having no amplification in both downlink (DL) and uplink (UL) within the device, and performing uplink transmission by backscattering on an externally provided carrier wave (hereinafter referred to as Device 1 for convenience of description); a device having peak power consumption of less than or equal to a few hundred µW, having energy storage, having amplification in both DL and UL within the device, and performing uplink transmission by backscattering on an externally provided carrier wave (hereinafter referred to as Device 2a for convenience of description); and a device having peak power consumption of less than or equal to a few hundred µW, having energy storage, having amplification in both DL and UL within the device, and performing uplink transmission using a carrier wave internally generated by the device (hereinafter referred to as Device 2b for convenience of description).

An AIoT RAN/reader/base station/UE reader or an AIoTF may transmit, indicate, or configure information or messages to an AIoT device to instruct enabling, activation, allowance, support, and/or configuration of any function or any combination of functions described below. For example, such information or messages may be transmitted from the AIoTF to the AIoT device through an AIoT NAS message or container. Alternatively, such information or messages may be transmitted to the AIoT device through a dedicated MAC PDU by an AIoT RAN/reader/base station/UE reader.

An AIoT RAN/reader/base station/UE reader or an AIoTF may transmit, indicate, or configure information or messages to an AIoT device for disabling, deactivating, restricting, and/or controlling any function or any combination of functions described below. For example, a prohibit, suspend, or deactivate timer for operation of a corresponding function may be indicated. The timer may be started or restarted at initiation of the corresponding function or before or after initiation of the corresponding function. While the timer is running, the device may be disabled, deactivated, restricted, or controlled so as not to initiate or perform the corresponding function.

Embodiments and corresponding functions described below may be performed independently. Alternatively, the embodiments and functions described below may be arbitrarily combined or aggregated and implemented, and it is apparent that such implementations are also included within the scope of the present invention.

Any information described below may be traffic characteristic information obtained, calculated, or derived statistically or empirically by a terminal or a network (for example, arbitrary statistics or statistical values such as an expected value/average, variance, standard deviation, minimum, or maximum). Accordingly, any information included in the present specification may represent at least one of an average (expected value), a minimum, a maximum, or a standard deviation. This is merely for convenience of description, and all information in the present specification may be used as statistical information. Any information described below may be pre-configured in a device or a network, or may be provisioned through OAM (Operations, Administration, and Maintenance), an application server, an application function, AIoT, UDM (Unified Data Management), and/or ADM (AIoT Data Management).

Hereinafter, a physical channel for R2D (Reader to Device) data transmission is referred to as a PRDCH (Physical Reader to Device Channel), a physical channel for D2R (Device to Reader) data transmission is referred to as a PDRCH (Physical Device to Reader Channel), and an interface/link between a reader and a device is referred to as an RD interface/link (for example, an AIoT radio interface). This is merely for convenience of description, and may be replaced with any other term.

Hereinafter, RD/DR link resource and scheduling information may include at least one of:
a start time/subframe/slot/symbol/reference time/arbitrary AIoT device unit time (for RD/DR link communication);
a start time/subframe/slot/symbol/reference time/arbitrary AIoT device unit time offset (for RD/DR link communication);
a start time/subframe/slot/symbol based on a specific reference time/point (for example, R2D data reception, start of R2D data reception, end of R2D data reception, or a serving base station/cell-specific reference time serving the corresponding reader);
a start time/subframe/slot/symbol offset based on a specific reference time (for RD/DR link communication);
a duration (for RD/DR link communication);
a transmission occasion (for an RD/DR link);
a transmission period (for an RD/DR link);
available time slots;
an available time-slot range;
a maximum number of time slots;
an uplink/downlink start time/subframe/slot/symbol and/or a start time/subframe/slot/symbol offset of an associated base station or assisting terminal for indicating an RD link start time;
frequency-domain information of an RD link;
an RD link subchannel number/index;
a DR link frequency offset;
an RD/DR link MCS;
an RD/DR link transport block size;
a communication range;
location information;
a priority;
a number of retransmissions for an RD/DR link; and
a validity period/time and/or a validity criterion (for RD/DR link communication).

### Retransmission Support Using Messages/Information for Indicating (D2R) Message/Data Transmission Failure

When an AIoT RAN/reader transmits any R2D message (e.g., an A-IoT paging, an A-IoT MSG2, or an R2D data transmission) to an AIoT device, the AIoT device may fail to receive the corresponding R2D message. Accordingly, the AIoT RAN/reader may fail to receive an expected response/subsequent D2R message from the corresponding AIoT device.

Even if an AIoT RAN/reader transmits any R2D message (e.g., an A-IoT paging, an A-IoT MSG2, or an R2D data transmission) to an AIoT device, the AIoT device receives the corresponding R2D message, and the AIoT device transmits a response/subsequent D2R message (e.g., an A-IoT MSG1, an A-IoT MSG3, or a D2R data transmission) for the R2D message to the AIoT RAN/reader, the AIoT RAN/reader may fail to receive the expected response/subsequent D2R message from the corresponding AIoT device (e.g., due to a problem on a D2R radio link).

If the AIoT RAN/reader determines/judges/verifies/recognizes a failure to receive an expected response/subsequent D2R message, by transmitting corresponding indication information via the corresponding R2D message (or a corresponding R2D message MAC PDU or a corresponding R2D message MAC header or a dedicated MAC PDU/Control Element (CE) for indicating a failure of the corresponding R2D message), the AIoT device may be caused to easily handle a subsequent AIoT device operation. And/or the AIoT device may easily transmit the response/subsequent D2R message expected by the AIoT RAN/reader. Through this, the AIoT RAN/reader may be caused to newly start/restart a corresponding A-IoT service procedure through paging associated with the corresponding A-IoT service request. In addition, a burden on the A-IoT device of having to perform access/re-access from the beginning may be alleviated.

For example, if the AIoT RAN/reader fails to receive an A-IoT message 3 (MSG3), the AIoT RAN/reader may cause the AIoT device to transmit an A-IoT MSG3 by explicitly/implicitly indicating information for indicating an MSG3 reception failure. Alternatively, the AIoT device may be caused to monitor for a paging message to start a new A-IoT service procedure.

For example, an R2D MAC PDU/CE for indicating MSG3 reception success and an R2D MAC PDU/CE for indicating MSG3 reception failure may be separately defined.

As another example, a (dedicated) R2D MAC PDU/CE for indicating an MSG3 reception failure may be defined. The MAC PDU/CE may be distinguished by at least one of information for distinguishing the MAC PDU/CE in the MAC header (e.g., an R2D MAC message type), information for distinguishing the MAC PDU/CE format, information for distinguishing that the MAC PDU/CE is a MAC PDU/CE for indicating an MSG3 reception failure, logical channel identification information included in the MAC PDU/CE, a PDU-type/data type identification information/Control-PDU-type included in the MAC PDU/CE, and service type information included in the MAC PDU.

As another example, an A-IoT message 2 (MSG2) may be used as the R2D MAC PDU for indicating the reception failure of the AIoT MSG3. An A-IoT MSG2 MAC PDU may include at least one of a 16-bit random ID received from an AIoT device via an A-IoT message 1 (MSG1), D2R access occasion/resource/frequency resource/scheduling information, and an Access Stratum Identifier (AS ID) assigned by an AIoT RAN/reader used for D2R scheduling (and/or R2D reception).

As another example, a (dedicated) R2D MAC PDU/CE for indicating an MSG3 reception failure or an A-IoT MSG2 MAC PDU/CE for indicating an MSG3 reception failure may include (1-bit) information/a field for indicating whether an MSG3 reception has failed in the corresponding MAC PDU (or the corresponding MAC PDU header).

As another example, if an AIoT device receives a corresponding R2D message, and if, based on corresponding MAC PDU header information, the corresponding MAC PDU is an A-IoT MSG2 MAC PDU, and a random ID included in the A-IoT MSG2 MAC PDU has the same value as a 16-bit random ID transmitted by the A-IoT device via an A-IoT MSG1, and/or an AS ID included in the A-IoT MSG2 MAC PDU has the same value as an AS ID received by the A-IoT device via a paging message (or a paging MAC PDU or a paging MAC header), and/or an AS ID included in the A-IoT MSG2 MAC PDU has the same value as an AS ID received by the A-IoT device via an R2D message, the A-IoT device may consider the A-IoT MSG2 as an A-IoT MSG2 for the A-IoT device and receive it.

(To check this) if an AIoT device receives an AS ID via a paging message (or a paging MAC PDU or a paging MAC header)/R2D message, it may store the AS ID as a device variable. If the device variable is stored with a different value, it may be replaced.

(To check this) if an AIoT device generates a random ID or transmits an A-IoT MSG1, it may store the random ID as a device variable. If the device variable is stored with a different value, it may be replaced.

A random ID and/or an AS ID may be stored for each piece of information for distinguishing paging associated with a corresponding IoT service request (or along with/in association with the information). Alternatively, a random ID and/or an AS ID may be stored regardless of information for distinguishing paging associated with a corresponding IoT service request.

As another example, if an A-IoT MSG2 is used as an R2D MAC PDU for indicating an MSG3 reception failure, the MAC PDU may not include upper layer data (or an upper layer data field (e.g., a dedicated AIoT NAS container field)). The MAC PDU header may exclude a field indicating whether upper layer data is included. Alternatively, the MAC PDU header may indicate that the A-IoT MSG2 indicates an MSG3 reception failure via a field indicating whether upper layer data is included.

As another example, if a reception failure of an A-IoT MSG3 occurs, considering an (energy) unavailable state of an AIoT device, the AIoT device may be caused to effectively handle the MSG3 reception failure of an AIoT RAN/reader. A dedicated R2D MAC PDU (or indication information in an R2D MAC PDU) for this may be defined.

If an AIoT device receives an R2D MAC PDU (or indication information in an R2D MAC PDU) for indicating an MSG3 reception failure of an AIoT RAN/reader, an R2D MAC PDU (or indication information in an R2D MAC PDU) for supporting an effective operation in a case where temporarily stored device variables/state information/counters/timers are lost in the AIoT device may be defined/used.

If an AIoT device transmits an A-IoT MSG1 in response to a received paging message (or after transmitting it), the AIoT device may enter an unavailable state in which A-IoT signaling/message/data transmission and reception is impossible (for any reason such as energy depletion). In such a case, an AS ID received from the AIoT RAN/reader and/or a random ID generated by the AIoT device (or corresponding stored device variables) may be deleted/removed/discarded/lost/released. In such a case, even if the AIoT RAN/reader retransmits an A-IoT MSG2, the AIoT device may not recognize/verify/consider that the message was transmitted to itself. Even if the AIoT RAN/reader retransmits an A-IoT MSG2, it may not receive a response for the corresponding A-IoT service. It may not receive a response for the A-IoT service until the AIoT RAN/reader retransmits an A-IoT paging message.

An R2D MAC PDU for indicating an MSG3 reception failure may include at least one information/field among a 16-bit random ID received from an AIoT device via an A-IoT MSG1 included in an A-IoT MSG2, D2R access occasion/resource/frequency resource/scheduling information, and an AS ID assigned by an AIoT RAN/reader used for D2R scheduling (and/or R2D reception). In addition, an R2D MAC PDU for indicating an MSG3 reception failure may include A-IoT device identification information (or any information stored in a non-volatile memory of the corresponding AIoT device). The information may include the same information/field as A-IoT device identification information included in an A-IoT paging message (or a paging MAC PDU or a paging MAC header).

An R2D MAC PDU for indicating an MSG3 reception failure may include at least one of information/a field for indicating whether A-IoT device identification information is included, information for indicating whether an AS ID is included, and an AS ID.

An AIoT RAN/reader may not include A-IoT device identification information when first transmitting an A-IoT MSG2 MAC PDU upon receiving an A-IoT MSG1. Thereafter, when the AIoT RAN/reader determines/judges/verifies/recognizes a failure to receive an A-IoT MSG3, it may include A-IoT device identification information when transmitting/retransmitting a subsequent A-IoT MSG2 MAC PDU.

An R2D MAC PDU for indicating an MSG3 reception failure may have a MAC PDU format that is distinct from an A-IoT MSG2 not including A-IoT device identification information. For example, the R2D MAC PDU may be distinguished by at least one of information for distinguishing the MAC PDU in the MAC header, information for distinguishing the MAC PDU format, logical channel identification information included in the MAC PDU, a PDU-type/data type identification information/Control-PDU-type included in the MAC PDU, and service type information included in the MAC PDU. As another method, an R2D MAC PDU for indicating an MSG3 reception failure may include information for indicating whether A-IoT device identification information is included.

When an AIoT device receives a corresponding R2D message, if, based on corresponding MAC PDU header information, the corresponding MAC PDU is an A-IoT MSG2 MAC PDU (or an R2D MAC PDU for indicating an MSG3 reception failure), and A-IoT device identification information included in the A-IoT MSG2 MAC PDU matches A-IoT device identification information of the A-IoT device, the A-IoT device may consider the A-IoT MSG2 (or the R2D MAC PDU for indicating an MSG3 reception failure) as a MAC PDU for the A-IoT device and receive it. If an AS ID has been received, the AIoT device may store the received AS ID as a device variable. If the device variable is stored with a different value, it may be replaced.

As another example, information/a field for indicating whether an MSG3 reception has failed may be included in a paging message (or a paging MAC PDU or a paging MAC header).

As another example, one or more pieces of information included in a paging message may be included in a MAC PDU (or a MAC header) for indicating an MSG3 reception failure.

Through this, when the A-IoT device enters an unavailable state, the A-IoT device may fall back to an operation for transmitting MSG1 to effectively perform an AIoT AS procedure.

Even when an AIoT device is in an available state, if it receives an R2D MAC PDU having a value different from a device variable stored in the AIoT device, it may perform an operation for transmitting MSG1 to transmit an A-IoT MSG1. When an AIoT device is in an available state, if it receives an R2D MAC PDU having the same value as a device variable stored in the AIoT device, it may perform a subsequent D2R data transmission according to information included in the R2D MAC PDU. For example, it may be configured to transmit/retransmit an A-IoT MSG3.

A paging MAC PDU including information for indicating whether an MSG3 reception has failed (or in which the information is set) may have a different MAC PDU format from a paging MAC PDU not including information for indicating whether an MSG3 reception has failed (or in which the information is not set). For example, it may be distinguished by at least one of information for distinguishing the MAC PDU in the MAC header, information for distinguishing the MAC PDU format, logical channel identification information included in the MAC PDU, and/or a PDU-type/data type identification information/Control-PDU-type included in the MAC PDU, and service type information included in the MAC PDU. Alternatively, it may not include one or more pieces of information/fields included in a paging message associated with an A-IoT service request in the MAC header. As another method, a paging MAC PDU including information for indicating whether an MSG3 reception has failed (or in which the information is set) may include information for indicating whether information for indicating an MSG3 reception failure is included.

As another example, if an AIoT RAN/reader succeeds in receiving an A-IoT MSG3, the AIoT RAN/reader may cause an AIoT device to effectively perform an operation to be processed in the AIoT device (based on information indicated by the AIoT RAN/reader) after MSG3 success by explicitly/implicitly indicating information for indicating MSG3 reception success.

For example, an R2D MAC PDU/CE for indicating MSG3 reception success (or for indicating reception success of a recent/previous D2R message/signaling/data transmitted from an A-IoT device, hereinafter referred to as an R2D MAC PDU for indicating MSG3 reception success for convenience of description. This is for convenience of description, and an R2D MAC PDU for indicating reception success of a recent/previous D2R message/signaling/data transmitted from an A-IoT device is also included in the present disclosure) may be defined. The MAC PDU/CE may be distinguished by at least one of information for distinguishing the MAC PDU/CE in the MAC header, information for distinguishing the MAC PDU/CE format, information for distinguishing that the MAC PDU/CE is a MAC PDU/CE for indicating MSG3 reception success, logical channel identification information included in the MAC PDU/CE, a PDU-type/data type identification information/Control-PDU-type included in the MAC PDU/CE, and service type information included in the MAC PDU/CE.

As another example, an R2D MAC PDU for indicating MSG3 reception success may have a fixed size.

As another example, an R2D MAC PDU for indicating MSG3 reception success may include at least one information/field among a 16-bit random ID received from an AIoT device via an A-IoT MSG1, an AS ID assigned by an AIoT RAN/reader used for D2R scheduling (and/or R2D reception), D2R access occasion/resource/frequency resource/scheduling information, information for indicating an existence of a remaining/to-be-transmitted/subsequent D2R data/segment, subsequent D2R access occasion/resource/frequency resource/scheduling information for a remaining/to-be-transmitted/subsequent D2R data/segment, and information for indicating an existence of remaining/to-be-transmitted R2D data.

### Failure Indication Provision for D2R Data Transmission

As described above, an A-IoT service needs to support various AIoT use cases such as inventory, sensor, positioning, command, etc. For example, an A-IoT AS procedure may be provided based on step A and step B of FIG. 9, or may be provided based on step A, step B, step C1, and step C2 of FIG. 9. In step B or step C of FIG. 9, an AIoT device may perform a D2R data transmission.

For example, if an AIoT device selected contention-free random access in step B of FIG. 9 (and/or received explicit or implicit information for indicating contention-free random access from an AIoT RAN/reader (e.g., 1-bit information for distinguishing contention-free random access and contention-based random access as explicit information, or at least one of dedicated D2R access occasion/resource/frequency resource/scheduling information and an AS ID for the device without contention as implicit information)), the AIoT device may transmit D2R data including A-IoT device identification information and/or upper layer data based on the indication information (e.g., explicit information for indicating contention-free random access or implicit information such as a dedicated D2R access occasion/resource/frequency resource).

As another example, if an AIoT device selected contention-based random access in step B of FIG. 9, the AIoT device may transmit a D2R message (A-IoT MSG1)/data including at least one of a random ID, A-IoT device identification information, and upper layer data on the corresponding D2R access occasion/resource/frequency resource. For example, if it has received explicit information for indicating contention-based random access from an AIoT RAN/reader, it may generate a random number and select an access occasion corresponding to the random number. An AIoT device may generate a 16-bit random ID and transmit a D2R message including the random ID.

As another example, if an AIoT device selected contention-based random access, transmitted an A-IoT MSG1, and thereafter received an A-IoT MSG2 from an AIoT RAN/reader in step B of FIG. 9, the AIoT device may transmit a D2R message (A-IoT MSG3)/data including at least one of A-IoT device identification information and upper layer data on a received dedicated D2R access occasion/resource/frequency resource.

As another example, in step C of FIG. 9, the AIoT device may transmit D2R data including at least one of A-IoT device identification information and upper layer data on a dedicated D2R access occasion/resource/frequency resource based on an AS ID and dedicated scheduling information received from an AIoT RAN/reader.

As in the foregoing embodiments, a D2R data transmission was performed in step B or step C of FIG. 9, but an AIoT RAN/reader may fail to receive all/part of the D2R data. An AIoT RAN/reader may include dedicated scheduling information for transmission of a response/subsequent/associated/next D2R message/data (e.g., A-IoT MSG1, A-IoT MSG3, or D2R data) for any R2D message/data (e.g., A-IoT paging, A-IoT MSG2, or R2D data) transmission. If the AIoT RAN/reader fails to receive the D2R data from the AIoT device until the scheduling (and/or a validity duration/validity criterion of the scheduling or a duration from when the scheduling is indicated at the AIoT RAN/reader to expected D2R data reception) expires/elapses, the AIoT RAN/reader may cause the AIoT device to transmit/retransmit the D2R data by explicitly/implicitly indicating information for indicating the D2R data reception failure.

For example, a (dedicated) R2D MAC PDU/CE for indicating the D2R data reception failure may be defined. The MAC PDU/CE may be distinguished by at least one of information for distinguishing the MAC PDU/CE in the MAC header, information for distinguishing the MAC PDU/CE format, information for distinguishing that the MAC PDU/CE is a MAC PDU/CE for indicating a D2R data reception failure, logical channel identification information included in the MAC PDU/CE, a PDU-type/data type identification information/Control-PDU-type included in the MAC PDU/CE, and service type information included in the MAC PDU.

As another example, an A-IoT MSG2 may be used as an R2D MAC PDU for indicating a D2R data reception failure. An A-IoT MSG2 MAC PDU may include at least one of a 16-bit random ID received from an AIoT device via an A-IoT MSG1, D2R access occasion/resource/frequency resource/scheduling information, an AS ID assigned by an AIoT RAN/reader used for D2R scheduling (and/or R2D reception), and information/a field for indicating whether a D2R data reception has failed.

As another example, a (dedicated) R2D MAC PDU/CE for indicating a D2R data reception failure or an A-IoT MSG2 MAC PDU/CE for indicating a D2R data reception failure may include (1-bit) information/a field for indicating whether an MSG3 reception has failed in the corresponding MAC PDU (or the corresponding MAC PDU header).

As another example, if an AIoT device receives a corresponding R2D message, and if, based on corresponding MAC PDU header information, the corresponding MAC PDU is an A-IoT MSG2 MAC PDU, and a random ID included in the A-IoT MSG2 MAC PDU has the same value as a 16-bit random ID transmitted by the A-IoT device via an A-IoT MSG1, and/or an AS ID included in the A-IoT MSG2 MAC PDU has the same value as an AS ID received by the A-IoT device via a paging message (or a paging MAC PDU or a paging MAC header), and/or an AS ID included in the A-IoT MSG2 MAC PDU has the same value as an AS ID received by the A-IoT device via an R2D message, the A-IoT device may consider the A-IoT MSG2 as an A-IoT MSG2 for the A-IoT device and receive it.

(To check this) if an AIoT device receives an AS ID via a paging message (or a paging MAC PDU or a paging MAC header)/R2D message, it may store the AS ID as a device variable. If the device variable is stored with a different value, it may be replaced.

(To check this) if an AIoT device generates a random ID or transmits an A-IoT MSG1, it may store the random ID as a device variable. If the device variable is stored with a different value, it may be replaced.

A random ID and/or an AS ID may be stored for each piece of information for distinguishing paging associated with a corresponding IoT service request (or along with/in association with the information). Alternatively, a random ID and/or an AS ID may be stored regardless of information for distinguishing paging associated with a corresponding IoT service request.

As another example, when an A-IoT MSG2 is used as an R2D MAC PDU for indicating a D2R data reception failure, the MAC PDU may not include upper layer data (or an upper layer data field (e.g., a dedicated AIoT NAS container field)). The MAC PDU header may not include a field indicating whether upper layer data is included. Alternatively, the MAC PDU header may indicate that the A-IoT MSG2 indicates a D2R data reception failure via a field indicating whether upper layer data is included.

As another example, when a reception failure of D2R data occurs, considering an (energy) unavailable state of an AIoT device, the AIoT device may be caused to effectively handle the D2R data reception failure of an AIoT RAN/reader. A dedicated R2D MAC PDU (or indication information in an R2D MAC PDU) for this may be defined.

When an AIoT device receives an R2D MAC PDU (or indication information in an R2D MAC PDU) for indicating a D2R data reception failure of an AIoT RAN/reader, an R2D MAC PDU (or indication information in an R2D MAC PDU) for supporting an effective operation in a case where temporarily stored device variables/state information/counters/timers are lost in the AIoT device may be defined/used.

An R2D MAC PDU for indicating a D2R data reception failure may include at least one information/field among a 16-bit random ID received from an AIoT device via an A-IoT MSG1 included in an A-IoT MSG2, D2R access occasion/resource/frequency resource/scheduling information, and an AS ID assigned by an AIoT RAN/reader used for D2R scheduling (and/or R2D reception). In addition, an R2D MAC PDU for indicating a D2R data reception failure may include A-IoT device identification information (or any information stored in a non-volatile memory of the corresponding AIoT device). The information may include the same information/field as A-IoT device identification information included in an A-IoT paging message (or a paging MAC PDU or a paging MAC header).

An R2D MAC PDU for indicating a D2R data reception failure may include at least one of information/a field for indicating whether A-IoT device identification information is included, information for indicating whether an AS ID is included, and an AS ID.

An AIoT RAN/reader may not include A-IoT device identification information when first transmitting an R2D MAC PDU after an A-IoT random access procedure. Thereafter, the AIoT RAN/reader may include A-IoT device identification information when transmitting/retransmitting the R2D MAC PDU.

An AIoT RAN/reader may not include A-IoT device identification information when first transmitting an R2D MAC PDU. Thereafter, the AIoT RAN/reader may include A-IoT device identification information when transmitting/retransmitting the R2D MAC PDU.

An R2D MAC PDU for indicating a D2R data reception failure may have a MAC PDU format that is distinct from an A-IoT MSG2 not including A-IoT device identification information. For example, it may be distinguished by at least one of information for distinguishing the MAC PDU in the MAC header, information for distinguishing the MAC PDU format, logical channel identification information included in the MAC PDU, a PDU-type/data type identification information/Control-PDU-type included in the MAC PDU, and service type information included in the MAC PDU. As another method, an R2D MAC PDU for indicating a D2R data reception failure may include information for indicating whether A-IoT device identification information is included.

When an AIoT device receives a corresponding R2D message, if, based on corresponding MAC PDU header information, the corresponding MAC PDU is an A-IoT MSG2 MAC PDU (or an R2D MAC PDU for indicating a D2R data reception failure), and A-IoT device identification information included in the A-IoT MSG2 MAC PDU matches A-IoT device identification information of the A-IoT device, the A-IoT device may consider the A-IoT MSG2 (or the R2D MAC PDU for indicating a D2R data reception failure) as a MAC PDU for the A-IoT device and receive it. If an AS ID has been received, the AIoT device may store the received AS ID as a device variable. If the device variable is stored with a different value, it may be replaced.

As another example, information/a field for indicating whether a D2R data reception has failed may be included in a paging message (or a paging MAC PDU or a paging MAC header).

As another example, one or more pieces of information included in a paging message may be included in a MAC PDU (or a MAC header) for indicating a D2R data reception failure. Through this, when the A-IoT device enters an unavailable state, the A-IoT device may fall back to an operation for transmitting MSG1 to effectively perform an AIoT AS procedure.

Even when an AIoT device is in an available state, if it receives an R2D MAC PDU having a value different from a device variable stored in the AIoT device, it may perform an operation for transmitting MSG1 to transmit an A-IoT MSG1. When an AIoT device is in an available state, if it receives an R2D MAC PDU having the same value as a device variable stored in the AIoT device, it may perform a subsequent D2R data transmission according to information included in the R2D MAC PDU.

A paging MAC PDU including information for indicating whether a D2R data reception has failed (or in which the information is set) may have a different MAC PDU format from a paging MAC PDU not including information for indicating whether a D2R data reception has failed (or in which the information is not set). For example, it may be distinguished by at least one of information for distinguishing the MAC PDU in the MAC header, information for distinguishing the MAC PDU format, logical channel identification information included in the MAC PDU, a PDU-type/data type identification information/Control-PDU-type included in the MAC PDU, and service type information included in the MAC PDU. Alternatively, it may not include one or more pieces of information/fields included in a paging message associated with an A-IoT service request in the MAC header.

As another method, a paging MAC PDU including information for indicating a D2R data reception failure (or in which the information is set) may include information for indicating whether information for indicating a D2R data reception failure is included.

Through one or more of the above-described operations, an AIoT device may be caused to easily handle a subsequent AIoT device operation. And/or an AIoT device may easily transmit a response/subsequent D2R message expected by an AIoT RAN/reader. Through this, an AIoT RAN/reader may be caused to newly start a corresponding A-IoT service procedure through paging associated with the corresponding A-IoT service request. In addition, a burden on the A-IoT device of having to perform an access attempt again from the beginning may be alleviated.

Hereinafter, another embodiment of the present disclosure will be described.

An application function/application server may request an A-IoT service (e.g., an inventory procedure, a command procedure) from an AIoTF. At this time, it may transmit information necessary for an A-IoT service operation. The information may be at least one of A-IoT service type information (e.g., inventory or command (e.g., read, write, enable, disable)), information for selecting an AIoT RAN/Reader, an expected/estimated/inferred number of target AIoT devices for the service, and an expected/estimated/inferred size of a D2R response message for the service request.

The AIoTF may determine A-IoT device identification information included in a paging message on an A-IoT radio interface based on information received from an application function. The AIoTF may transmit an A-IoT service request message (e.g., an inventory request message or a command request message) to an AIoT RAN. The A-IoT service request message may be transmitted between the AIoTF and the AIoT RAN via an AMF. For example, it may be transmitted via an interface between the AIoTF and the AMF (e.g., an Nz interface) and an interface between the AMF and the AIoT RAN (e.g., an N2/NG interface). The A-IoT service request message may be transmitted between the AIoT RAN and the AMF via NGAP. Alternatively, a (direct) interface between the AIoTF and the AIoT RAN (e.g., an Nx interface) may be defined, and an application protocol provided through the interface on the interface (e.g., NxAP) (or a service-based interface protocol between the AIoTF and the AIoT RAN or an application protocol on top of a service-based interface protocol between the AIoTF and the AIoT RAN) may be defined and transmitted.

An AIoT RAN/reader may perform an A-IoT procedure (e.g., a procedure performed in an Access Stratum between the AIoT RAN/Reader and an AIoT device) with an AIoT device via an A-IoT radio interface. For this, the AIoT RAN/reader may transmit an A-IoT paging message to the AIoT device. The following methods may be used for an AIoT device to effectively distinguish and handle an A-IoT service request procedure of an upper layer of an Access Stratum (AS) (e.g., A-IoT NAS, A-IoT data/application) and/or an A-IoT procedure of an access layer (e.g., Access stratum or PHY/MAC).

For example, a paging message may request an A-IoT service from an AIoT device via a downlink NAS message.

An AIoTF may generate a NAS message for an A-IoT service request based on information received from an application function. The NAS message is a NAS message that is processed in a NAS layer/entity of the AIoTF and an AIoT device. The NAS message may include at least one of A-IoT service type information, A-IoT device identification information, and a security parameter.

Here, the A-IoT service type information may distinguish at least one of an inventory service/operation (or at least one of an inventory service/operation for a single device, an inventory service/operation for a group of devices, an inventory service/operation for a plurality of devices, and an inventory service/operation for all devices is distinguished via a corresponding field), a command service/operation (or at least one of a command service/operation for a single device, a command service/operation for a group of devices, a command service/operation for a plurality of devices, and a command service/operation for all devices is distinguished via a corresponding field), and a Read/Write/Enable/Disable service/operation (or at least one of a Read/Write/Enable/Disable service/operation for a single device, a Read/Write/Enable/Disable service/operation for a group of devices, a Read/Write/Enable/Disable service/operation for a plurality of devices, and a Read/Write/Enable/Disable service/operation for all devices is distinguished via a corresponding field).

For example, 1 bit may be used as information for distinguishing an A-IoT service type (for a corresponding paging MAC PDU or for a downlink MAC PDU or for a corresponding MAC header) to distinguish between an inventory service/operation and a command service/operation. 2 bits may be used as information for distinguishing an additional service type for a command service/operation to distinguish a Read/Write/Enable/Disable service/operation. The A-IoT device may ignore information for distinguishing an additional service type when the A-IoT service type is set to inventory. Alternatively, when an A-IoT service type is set to inventory for an A-IoT device, information for distinguishing an additional service type may be set to a reserved value and used to support forward compatibility in the future.

As another example, 3 bits may be used as information for distinguishing an A-IoT service type to distinguish an inventory/read/write/enable/disable service/operation. The remaining 3 of 8 values may be set to reserved values and used to support forward compatibility in the future.

As another example, to support forward compatibility, 2 bits may be used as information for distinguishing an A-IoT service type to distinguish between an inventory service/operation and a command service/operation. 2 bits may be used as information for distinguishing an additional service type for a command service/operation to distinguish a read/write/enable/disable service/operation. Addition of a future A-IoT service/operation may be supported through a reserved value of 1 bit (2 values) for distinguishing an A-IoT service type. Alternatively, 1 bit may be used as information for distinguishing an A-IoT service type, and addition of a future A-IoT service/operation may be distinguished by adding a separate field for distinguishing a MAC PDU version/release/format/service type version.

As another example, to support forward compatibility, 2 bits may be used as information for distinguishing an A-IoT service type to distinguish an inventory service/operation and a command service/operation. If the information for distinguishing an A-IoT service type is set to a command service/operation, a MAC header may distinguish a read/write/enable/disable service/operation by adding 2 bits as information for distinguishing an additional service type. If the information for distinguishing an A-IoT service type is set to an inventory service/operation, a MAC header may exclude a 2-bit field for distinguishing an additional service type.

As another example, to support forward compatibility (for a corresponding paging MAC PDU or for a downlink MAC PDU or for a corresponding MAC header), a corresponding MAC PDU (protocol) version/release/format/service type version field may be included.

As another example, 1 bit may be used as information for indicating whether it is a single/multiple device (or a single/multiple device identifier) to distinguish (for a corresponding paging MAC PDU or for a downlink MAC PDU or for a corresponding MAC header). In the case of a group identifier, a value for distinguishing a single device and a value for distinguishing a group of devices may be separately used within a value for distinguishing a single device (or a single device identifier). An A-IoT device may check whether terminal identification information included in a paging message matches its own individual device identifier and/or a group device identifier to which it belongs. If the terminal identification information included in the paging message matches one or more of its own individual device identifier and a group device identifier to which it belongs, the A-IoT device may perform a random access procedure to an A-IoT base station/reader.

As another example, if an A-IoT device identification information field is included (for a corresponding paging MAC PDU or for a downlink MAC PDU or for a corresponding MAC header), a specific value for the A-IoT device identification information (e.g., all 1s or all 0s) may be used as information for indicating paging for all devices within the AIoT RAN/reader coverage.

As another example, an information/field for indicating/distinguishing whether to page/receive for all devices within the AIoT RAN/reader coverage may be included (for a corresponding paging MAC PDU or for a downlink MAC PDU or for a corresponding MAC header). This may be provided by defining a physical channel distinct from the PRDCH, provided by scrambling the information with a specific identifier within the PRDCH, provided by adding a corresponding field within the MAC PDU/header, or provided by defining a field for distinguishing the MAC PDU/header.

As another example, a paging message (paging MAC PDU) for all devices within the AIoT RAN/reader coverage and a paging message (paging MAC PDU) for a single/group device within the AIoT RAN/reader coverage may be defined to have different formats (for a corresponding paging MAC PDU or for a downlink MAC PDU or for a corresponding MAC header). For example, a paging message for a single/group AIoT device may include an A-IoT device identification information field (and/or an information field for identifying an A-IoT device) within the paging MAC PDU (or the paging MAC header or a NAS message/container included in the paging message). On the other hand, a paging message for all AIoT devices may not include an A-IoT device identification information field (and/or an information field for identifying an A-IoT device) within the paging MAC PDU (or the paging MAC header or a NAS message/container included in the paging message). A paging message format for a single/group AIoT device and a paging message format for all AIoT devices may be distinguished by at least one of information for distinguishing the MAC PDU in the MAC header, information for distinguishing the MAC PDU format, a specific bit in information for distinguishing that the MAC PDU is a paging message, logical channel identification information included in the MAC PDU, a PDU-type/data type identification information included in the MAC PDU, and service type information included in the MAC PDU.

As another example, 2 bits may be used as information for distinguishing at least one of a single device, a plurality of devices, a group of devices, and all devices within the AIoT RAN/reader coverage (for a corresponding paging MAC PDU or for a downlink MAC PDU or for a corresponding MAC header).

As another example, in the case of a group identifier, information for indicating whether it is a single/multiple device (or a single/multiple device identifier) may be set to a single device, and an additional field for distinguishing and indicating a group device identifier may be included if applicable. If information for indicating whether it is a single/multiple device (or a single/multiple device identifier) is set to multiple devices, a MAC header may be configured without an additional field for distinguishing and indicating a group device identifier.

As another example, if a corresponding paging MAC PDU indicates paging for all devices via an information/field for indicating/distinguishing whether to page/receive for all devices and/or if an A-IoT device identification information field is not included (for a corresponding paging MAC PDU or for a downlink MAC PDU or for a corresponding MAC header), an AIoT device may ignore information for indicating whether a single device or a plurality of devices (or a single device identifier or a plurality of device identifiers) is (included).

As another example, 2 bits may be used as information for distinguishing an A-IoT service type to distinguish at least one of an inventory service/operation for a single device, an inventory service/operation for a plurality of devices, a command service/operation for a single device, and a command service/operation for a plurality of devices. 2 bits may be used as information for distinguishing an additional service type for a command service/operation to distinguish a read/write/enable/disable service/operation.

As another example, 4 bits (16 values) may be used as information for distinguishing an A-IoT service type to distinguish an inventory/read/write/enable/disable service/operation for a single device and an inventory/read/write/enable/disable service/operation for a plurality of devices.

As another example, an A-IoT paging message may include A-IoT device identification information via a paging ID field. The identification information of an A-IoT device may support bits of various kinds/options. For example, typical A-IoT device identification information is known to be 96 bits or 128 bits. An A-IoT device permanent identifier including an ID type, a Public Land Mobile Network (PLMN) ID, a Network Identifier (NID), and a third party ID is a maximum of 196 bits or 228 bits. Filtering information which may be used as group A-IoT device identification information may have a value of 199 bits or 231 bits or less, which is obtained by adding a 3-bit filtering type to an A-IoT device permanent identifier format. When the bits of a paging ID length field are 8 bits, 256 values may be distinguished, so the above-mentioned A-IoT device identification information may be included.

However, for an application having a value greater than A-IoT device identification information of 96 bits or 128 bits (A-IoT device permanent identifier maximum 196 bits or 228 bits) (e.g., healthcare or global logistics), there is a problem that paging via the aforementioned 8-bit size may not be supported. To solve this problem, the following method may be considered.

For example, to support typical A-IoT device identification information of 256 bits or 496 bits (A-IoT device permanent identifier maximum 356 bits or 596 bits) for an application having a value greater than A-IoT device identification information of 96 bits or 128 bits (A-IoT device permanent identifier is maximum 196 bits or 228 bits) (e.g., healthcare or global logistics), a paging ID length field may be supported to have a value of 10 bits (or 9 bits).

As another example, when an A-IoT paging message has a size of A-IoT device identification information (paging ID) of 8 bits or more (e.g., 10 bits or 9 bits), to support forward compatibility for the paging message, a paging ID size field added to an 8-bit paging ID size field (e.g., A-IoT device identification information (paging ID size - 8) bits may be included. For example, if 10-bit A-IoT device identification information/paging ID is supported in a next release/version, an additional paging ID size field of 2 bits may be included. The additional field may be included in a field before padding bits. For example, if a paging message used when CBRA is indicated to an A-IoT device has R2D Message Type, R2D length/transport block size, access type (e.g., CBRA), identification information (transaction ID) associated with one A-IoT service request received from a core network, A-IoT device identification information (paging ID) and/or information for indicating an existence of a paging ID length, paging ID length (8 bits), A-IoT device identification information (paging ID), number of access occasions, scheduling information for a subsequent D2R message/data of the R2D, and/or indication information for determining a monitoring window for a Random ID Response message (K: This field indicates that the value K is 1 (when set to 0) or 4 (when set to 1) used for determining a monitor window for a Random ID Response message. The length of the field is 1 bit), and Fill bit (This field is of variable size and may be used to pad for byte alignment (1-7 bits)), a paging message supporting 10-bit A-IoT device identification information/paging ID may have R2D Message Type, R2D length/transport block size, access type (e.g., CBRA), identification information (transaction ID) associated with one A-IoT service request received from a core network, A-IoT device identification information (paging ID) and/or information for indicating an existence of a paging ID length, paging ID length (8 bits), A-IoT device identification information (paging ID), number of access occasions, scheduling information for a subsequent D2R message/data of the R2D, indication information (K) for determining a monitoring window for a Random ID Response message, additional paging ID size (2 bits), additional paging ID, and/or Fill bit (This field is of variable size and may be used to pad for byte alignment (1-7 bits)) when CBRA is indicated.

Alternatively, if a paging message used when Contention-Free Access (CFA) is indicated to an AIoT device has R2D Message Type, R2D length/transport block size, access type (e.g., CFA), paging ID length, A-IoT device identification information (paging ID), scheduling information for a subsequent D2R message/data of the R2D, and/or Fill bit (This field is of variable size and may be used to pad for byte alignment (1-7 bits)), a paging message supporting 10-bit A-IoT device identification information/paging ID may have R2D Message Type, R2D length/transport block size, access type (e.g., CFA), paging ID length, A-IoT device identification information (paging ID), scheduling information for a subsequent D2R message/data of the R2D, additional paging ID size (2 bits), additional paging ID, Fill bit (This field is of variable size and may be used to pad for byte alignment (1-7 bits)) when CFA is indicated, and/or an AIoT device supporting an 8-bit paging ID length field may ignore an additional paging ID size and/or an additional paging ID field. An AIoT device supporting a 10-bit paging ID length field may indicate a 10-bit paging ID size using an 8-bit paging ID length field and an additional paging ID size bit. An AIoT device supporting a 10-bit paging ID length field may include A-IoT device identification information via a paging ID field and an additional paging ID field.

As another example, a paging message may include security processing parameters for an A-IoT device. The location of the information needs to be determined. For example, authentication for an A-IoT device may be performed when authentication is triggered by a network for an inventory procedure and a command procedure. For example, an AIoTF may receive a random number (e.g., 128-bit RAND) for a corresponding AIoT device generated in a corresponding core network node from the corresponding core network node (e.g., ADM: AIoT Data Management) and transmit it to a RAN/reader via an inventory request. The RAN/reader may include the random number in a paging message. As another example, a security/privacy-protected temporary identifier may be used during an inventory procedure to protect A-IoT device identification information. A security/privacy-protected temporary identifier may be generated based on a key shared between an AIoT device and a corresponding core network node (e.g., K_AloT). When using a security/privacy-protected temporary identifier, an AIoTF may transmit information for indicating a temporary identifier processing type/method (security/privacy protected) to a RAN/reader via an inventory request message. Information for indicating a temporary identifier processing type/method (e.g., information for indicating a security processing type for A-IoT device identification information) may indicate whether a security/privacy-protected temporary identifier is of a concealed type or a stored type. And/or information for indicating a temporary identifier processing type/method may indicate whether a temporary identifier is of a type protected/concealed by a stored temporary identifier, a type protected/concealed by a permanent identifier, or a stored type. And/or information for indicating a temporary identifier processing type/method may include information for indicating whether a stored temporary identifier is to be updated (whether the stored T-ID type shall be updated with or without a command). A paging message may include a security/privacy-protected temporary identifier and information for indicating a security/privacy-protected temporary identifier processing type.

A-IoT device identification information may represent A-IoT device identification information (e.g., paging identification information) included in an NxAP (or a service-based interface protocol between an AIoTF and an AIoT RAN or an application protocol on top of a service-based interface protocol between an AIoTF and an AIoT RAN/reader)/NGAP message between an AIoTF and an AIoT RAN, or A-IoT device identification information used in a Non-Access Stratum (NAS) layer/entity of an AIoTF and an AIoT device. The information may represent at least one of a full permanent Ambient IoT Device Identifier configured in an AIoT device, a part of an Ambient IoT Device Identifier, a full security (e.g., privacy-protection/cyphering/encryption, integrity protection, Message Authentication Code, hash function, and/or device authentication) protected/processed/released/verified permanent AIoT device identifier, a part of a security protected/processed/released/verified permanent AIoT device identifier, and/or a temporary code/identifier calculated/generated/derived/determined through security protection/processing/release/verification for the AIoT device (or a full/part permanent AIoT device identifier), a code associated with the AIoT device (or a full/part permanent AIoT device identifier), and filtering/masking information for determining/extracting the A-IoT device identification information. A permanent AIoT device identifier may be assigned by an operator or a 3rd party. A permanent AIoT device identifier may include one of a network identifier (e.g., Mobile Country Code (MCC)+Mobile Network Code (MNC) and/or Network Identifier (NID)) or information used to identify a 3rd party. A permanent AIoT device identifier may include information used to distinguish different AIoT devices within a network identifier (e.g., MCC+MNC and/or NID) or information used to identify a 3rd party (e.g., Electronic Product Code (EPC) or other local/internal identification information). One or more pieces of A-IoT device identification information may be used for one A-IoT device in any signaling process. For example, information used to identify a network identifier (e.g., MCC+MNC and/or NID) or a 3rd party may be used as first A-IoT device identification information, and information used to distinguish different AIoT devices within information used to identify a network identifier (e.g., MCC+MNC and/or NID) or a 3rd party (e.g., Electronic Product Code (EPC) or other local/internal identification information) may be used as second A-IoT device identification information. At least one of the first A-IoT device identification information and the second A-IoT device identification information (or at least one of a full/part of the first A-IoT device identification information and a full/part of the second A-IoT device identification information) may be transmitted and received after being security protected/processed/released/verified. (e.g., first A-IoT device identification information (plaintext), second A-IoT device identification information (ciphertext), or vice versa)

A security parameter may represent at least one of a key used for security (e.g., privacy-protection/cyphering/encryption, integrity protection, Message Authentication Code, hash function, and/or device authentication) protection/processing/release/verification for a full/part permanent AIoT device identifier in an AIoTF and/or an AIoT device, key identification information, a fresh value, a counter, a token, a verification value/result value/response value (RES: Result/XRES: Expected Result), a random parameter (RAND generated in a network and/or RAND generated in a device), an algorithm, and device credential/profile.

An AIoTF may transmit an NxAP/NGAP message including information/a NAS message for an A-IoT service (e.g., inventory or command) request to an AIoT RAN. For example, an AIoTF may transmit a security-processed/protected message for an A-IoT NAS message to a RAN/reader. The (NxAP/NGAP) request message may include, in addition to the NAS message, at least one of corresponding A-IoT device identification information included in a paging message, an expected/estimated/inferred number of target AIoT devices for the service, an expected/estimated/inferred size of a D2R response message for the service request, and a security parameter.

For example, an AIoT RAN/reader may transmit a paging R2D message including information/a NAS message for an A-IoT service request to an AIoT device. The paging message may be transmitted to the AIoT device via a PRDCH by a specific downlink/R2D MAC PDU (or a MAC Control element or a Paging MAC PDU). An AIoT device may receive the MAC PDU via the PRDCH. A downlink/R2D MAC PDU (or a MAC Control element or a Paging MAC PDU) including a paging message may include explicit indication information/a field for distinguishing it in the MAC PDU. Alternatively, a downlink/R2D MAC PDU (or a MAC Control element or a Paging MAC PDU) including a paging message may be implicitly distinguished by the presence of any field/field combination included in the MAC PDU.

For example, it may be indicated by including at least one of information for indicating whether a NAS message/container/security is included/processed for an A-IoT service request, associated/identification information for one A-IoT service request received from a core network, information for indicating whether a paging message is included, information for distinguishing a MAC PDU format for paging, and information for distinguishing an A-IoT service type. It may be indicated that the MAC PDU includes/represents a paging message by at least one of an A-IoT service type, information for indicating whether it is a first message for the A-IoT service type, A-IoT device identification information, AIoT RAN/reader identification information, and/or information for indicating whether a NAS message/container is included, and information for indicating whether an AS ID is included/applied. Information for indicating whether security is included/processed may represent information for indicating whether a random parameter/number (RAND_Network) generated in a core network is included/present (or whether authentication is performed) for authentication of the AIoT device and/or device identifier security/privacy protection processing. Alternatively, information for indicating whether security is included/processed may represent a field for indicating whether a security/privacy protected A-IoT device identifier processing type/method is included/present.

As another example, a message for paging transmitted by an AIoT RAN/reader to an AIoT device may not include a NAS message/container received from an AIoTF. For example, when an AIoT RAN/reader transmits a message for paging including indication information for contention-based random access for a corresponding AIoT device, the message may be configured not to include a NAS message/container received from an AIoTF. Thereafter, a NAS message/container received from an AIoTF may be included in an A-IoT MSG2 and/or an R2D data transmission. The paging message may be transmitted to the AIoT device via a PRDCH by a specific downlink/R2D MAC PDU (or a MAC Control element or a Paging MAC PDU). An AIoT device may receive the MAC PDU via the PRDCH. A downlink/R2D MAC PDU (or a MAC Control element or a Paging MAC PDU) including a paging message may include explicit indication information/a field for distinguishing it in the MAC PDU. Alternatively, a downlink/R2D MAC PDU (or a MAC Control element or a Paging MAC PDU) including a paging message may be implicitly distinguished by the presence of any field/field combination included in the MAC PDU. For example, it may be indicated that the MAC PDU includes/represents a paging message by at least one of an A-IoT service type, information for indicating whether it is a first message for the A-IoT service type, A-IoT device identification information, AIoT RAN/reader identification information, and information for indicating whether an AS ID is included/applied.

As another example, an AIoT RAN/reader may transmit a paging message to an AIoT device via a paging logical channel/MAC-PDU for an A-IoT service request. A logical channel identifier/MAC-PDU-identifier/distinguishing information for distinguishing the paging logical channel/MAC-PDU may be defined. The MAC PDU (or MAC Control element or Paging MAC PDU) may be transmitted to an AIoT device via a PRDCH including the logical channel identifier/MAC-PDU-identifier/distinguishing indication information. An AIoT device may receive the MAC PDU via the PRDCH.

Here, information for indicating whether an AS ID is included/applied represents information for indicating whether an access stratum (AS) identifier used for (at least) D2R scheduling and R2D reception purposes is included/applied. An AS ID may be one of a random ID included in a first D2R message (or A-IoT MSG1) or an ID assigned by a reader to a device. The AS ID may be included in a subsequent R2D message including the information, so that the device may distinguish and use a message transmitted to itself via the AS ID.

If an AIoT device receives an A-IoT paging message, for example, if a MAC layer/entity of the AIoT device receives a MAC PDU including information indicating paging, the MAC layer/entity of the AIoT device may determine a response by comparing information for indicating a device requiring a response included in the A-IoT paging message (or A-IoT device identification information) with stored A-IoT identification information to determine whether there is a match.

If an AIoT RAN/Reader transmits an A-IoT paging message due to one A-IoT service request/trigger requested from one core network, the AIoT RAN/Reader may fail to receive a response thereto from an AIoT device. Accordingly, the AIoT RAN/Reader may additionally transmit an A-IoT paging message due to the A-IoT service request/trigger. At this time, if the AIoT device has transmitted a response message (e.g., A-IoT MSG1) for the paging message to the AIoT RAN/Reader before receiving any additionally transmitted A-IoT paging message, an operation on how to handle a subsequently received A-IoT paging message due to the A-IoT service request/trigger needs to be specifically defined. To support this, the following method may be used.

For example, an AIoT RAN/reader may receive information for identifying/distinguishing one A-IoT service request/trigger requested from one core network (associated/identification information for one A-IoT service request received from a core network) from the core network. Hereinafter, information for identifying/distinguishing one A-IoT service request/trigger requested from one core network may represent one or more pieces of information among information for distinguishing an A-IoT service request and/or an attribute of the A-IoT service request.

If an AIoT RAN/reader receives one A-IoT service request from a core network (e.g., an AloTF), it may include information for distinguishing the A-IoT service request and/or an attribute of the A-IoT service request. The information may include at least one of corresponding A-IoT service type information (e.g., inventory or command (e.g., read, write, enable, disable)), information for distinguishing an A-IoT service request, information for indicating an A-IoT service purpose, information for indicating retransmission-related information of the A-IoT service (e.g., maximum number of times, interval/period), and A-IoT device identification information.

Information for distinguishing/identifying an A-IoT service request represents identification information for handling one/the same A-IoT service request by one/the same core network in association with paging by one or more AloT RAN(s)/Reader(s). This is for convenience of description and may be replaced with any other name, such as associated/identification information for one A-IoT service request received from a core network.

If one AIoTF selects one AIoT RAN/reader for one A-IoT service request (e.g., inventory) and transmits one A-IoT paging message to one AIoT device, the information may initialize the information/field (e.g., set the information to 0) according to the AIoT RAN/reader and AIoT device combination. The AIoT RAN/reader may include the information (e.g., 0) in a paging message for indicating a response of the AIoT device and transmit it, so that the AloT device may distinguish the core network and the A-IoT service request associated with the paging. If the same AIoTF selects the same AIoT RAN/reader for another A-IoT service request (e.g., a command) and transmits another A-IoT paging message to the same AIoT device, the information may increment the information/field by 1 (e.g., to 1) according to the AIoT RAN/reader and AIoT device combination. In actual operation, for the same A-IoT service type, a core network may not indicate another A-IoT service request for the same A-IoT service type before receiving a response for success or failure from a radio network. Therefore, the corresponding field may be applied as 1 bit for one AIoT RAN/reader. However, for the purpose of collecting/tracking/confirming location/proximity, paging may be desired to be performed via a plurality (e.g., three or more) of AIoT RANs/Readers. For example, if one AIoTF selects three AIoT RANs/Readers for one A-IoT service request (e.g., inventory) and transmits three A-IoT paging messages to one AIoT device, the information may be set such that the first AIoT RAN/reader sets the information/field to 0, the second AIoT RAN/reader sets the information/field to 1, and the third AIoT RAN/reader sets the information/field to 2, according to the AIoT RANs/Readers and AIoT device combination. Therefore, since paging is performed by selecting a plurality of AIoT RANs/Readers, at least 2 bits may be applied. Each AIoT RAN/reader may include the information received from the core network in an AIoT paging message (or a paging MAC PDU or a paging MAC header) and transmit the AIoT paging message. Alternatively, the information may be set to 1 bit indicated in a toggle (On/Off) manner when a new A-IoT service request is indicated as information for distinguishing A-IoT service paging according to the AIoT RAN/reader and AIoT device combination. Alternatively, it may be set to 2 or 3 bits, in which a 1-bit value indicated in a toggle (On/Off) manner when a new A-IoT service request is indicated to the AIoT RAN/Reader as information for distinguishing A-IoT service paging according to information (1 bit/2 bits) for distinguishing the AIoT RAN/reader and the AIoT device combination is combined.

Information for indicating an A-IoT service purpose represents information for instructing/determining to transmit a response without skipping transmission of a response for a (subsequent) paging message (ignoring duplicate avoidance processing for the paging message) even if the paging is a message received redundantly, triggered by the same A-IoT service request by the same core network, for a paging message received by an AIoT device (which has successfully transmitted a response to a previous paging message triggered by the same A-IoT service request by the same core network). This is for convenience of description and may be replaced with any other name such as location/proximity indication information, response indication information, or information for indicating a response without duplicate avoidance processing.

A core network may transmit a paging message via one or more AIoT RANs/Readers by selecting the one or more AIoT RAN(s)/Reader(s) to increase a success probability of a response from an AIoT device. In that case, if the AIoT device has successfully transmitted a response to a paging message received from one AIoT RAN/Reader triggered by the A-IoT service request by the core network, the AIoT device may determine to skip transmission of a response to a (subsequent) paging message received from another AIoT RAN/Reader associated with/triggered by the A-IoT service request by the core network.

A core network may transmit a paging message via one or more AIoT RAN(s)/Reader(s) by selecting the one or more AIoT RAN(s)/Reader(s) to collect/track/confirm a location/proximity of an AIoT device. In that case, even if the AIoT device has successfully transmitted a response to a paging message received from one AIoT RAN/Reader triggered by the A-IoT service request by the core network, the AIoT device may determine to perform transmission of a response to a (subsequent) paging message received from another AIoT RAN/Reader triggered by the A-IoT service request by the core network. To indicate this, information for indicating a purpose of the A-IoT service may be included. The information may be defined as 1-bit information to indicate whether the purpose is a location/proximity purpose. Alternatively, it may be defined as information of 2 bits or more to distinguish a plurality of specific purposes. Alternatively, the information may be defined as 1-bit information for instructing to transmit without skipping transmission of a response for the paging message. Alternatively, the information may be defined as 1-bit/2-bit information for instructing the AIoT device to transmit a response regardless of whether there was a (previous) successful response to paging messages received from a plurality of AIoT RAN(s)/Reader(s) triggered by the A-IoT service request by the core network.

Retransmission-related information of the A-IoT service (e.g., maximum number of times or interval/period) represents information for indicating a maximum number of retransmissions when an AIoT RAN(s)/Reader(s) triggered by the A-IoT service request by the core network transmits a paging message and fails to receive a successful response from the AIoT device, or information for indicating a time/timing for initiating retransmission of a paging message associated with the A-IoT service request by the core network. The time/timing may represent a time from a previous paging message transmission to a next paging message transmission, or a time from a previous paging message transmission to a next paging message transmission after the timer expires when a successful response is not received until the timer expires by operating a specific timer, and a setting time of the timer.

As another example, an AIoT RAN/reader may assign/set/generate information/an identifier for determining whether the AIoT device should skip transmission of a response for the paging message based on information(s)/identifier(s) associated with one A-IoT service request received from a core network (or information for identifying/distinguishing one A-IoT service request/trigger requested from one core network) and send it included in an AIoT paging message (or a paging MAC PDU or a paging MAC header).

As described above, an AIoT RAN/reader may receive information for identifying/distinguishing one A-IoT service request/trigger requested from one core network from the core network. The information may be at least one of corresponding A-IoT service type information, information for distinguishing an A-IoT service request, information for indicating an A-IoT service purpose, information for indicating retransmission-related information of the A-IoT service (e.g., maximum number of times or interval/period), and A-IoT device identification information. However, an AIoT device may not be able to check whether a paging message retransmitted on its own by an AIoT RAN/reader has been received redundantly only with the information received from the core network. Therefore, for an AIoT device to distinguish and handle whether a paging associated with the same A-IoT service request by the same core network has been received redundantly, it is necessary to transmit information received from the core network and/or information assigned/set/generated by the AIoT RAN/reader included in a paging message. At this time, an AIoT paging message (or a paging MAC PDU or a paging MAC header) may define and include a field including information received from the core network and a field assigned/set/generated by the AIoT RAN/reader as different information elements/fields. As another method, to simplify processing in an AIoT device, an AIoT paging message (or a paging MAC PDU or a paging MAC header) may define and include information received from the core network and a field assigned/set/generated by the AIoT RAN/reader combined into one information element/field. For example, it may be defined and included as the aforementioned 1 bit/2 bits received from the core network + the following 1 bit/2 bits set by the AIoT RAN/reader.

If a response to paging associated with the same A-IoT service request by the same core network is received, an AIoT RAN/reader does not need to retransmit an A-IoT paging message associated with the A-IoT service request. From the perspective of an AloT RAN/reader, whether it is associated with the same A-IoT service request by the same core network may be considered. A field assigned/set/generated by an AIoT RAN/reader may be initialized when a new A-IoT service request from the core network is indicated for the AIoT RAN/reader and AIoT device combination. A field assigned/set/generated by an AloT RAN/reader may be indicated as 1 bit set in a toggle (On/Off) manner when the AIoT RAN/reader transmits/retransmits the paging MAC PDU (or may be indicated as 2 bits incremented by 1). Alternatively, a field assigned/set/generated by an AIoT RAN/reader may be initialized (e.g., to 0) when the AIoT RAN/Reader first transmits the paging MAC PDU associated with the A-IoT service request of the core network, and thereafter incremented by 1 (or by 1) when retransmitting the paging MAC PDU associated with the A-IoT service request of the core network.

As another example, a NAS message/container including specific information(s)/identifier(s) associated with the A-IoT service received from a core network may be included in a paging message, the AIoT device may indicate the NAS message/container included in the paging message to an upper layer, the AIoT device may process it in a NAS layer/entity and indicate the processed information to a MAC layer/entity, and the MAC layer/entity may determine whether to skip transmission of a response for the paging message based on the information. And/or a MAC layer/entity may determine whether to skip transmission of a response for a paging message based on at least one of information received by an AIoT device from a NAS layer/entity and information determined/assigned/generated by an AIoT RAN/reader and included in/indicated by a paging message (or a paging MAC PDU or a paging MAC header).

A core network (e.g., an AIoTF) may generate a specific message/container in a NAS layer with specific information(s)/identifier(s) associated with an A-IoT service. A core network (e.g., an AIoTF) may transmit a NAS message/container including specific information(s)/identifier(s) associated with an A-IoT service to an AIoT device included in an AIoT paging message via an AIoT RAN/reader. The specific information(s)/identifier(s) associated with the A-IoT service may be at least one of the aforementioned information for distinguishing the A-IoT service request and an attribute of the A-IoT service request.

As another example, an AIoT RAN(s)/Reader(s) may determine/assign/generate information/an identifier for the AIoT device to determine whether to skip transmission of a response for a paging message based on specific information(s)/identifier(s) associated with an A-IoT service received from a core network and transmit it to an AIoT device included in a paging message (or a paging MAC PDU or a paging MAC header).

The information/identifier may be defined as one field (if divided into one or more fields, they may be combined and determined). Through this, an AIoT device (which has successfully transmitted a response to a previous paging message triggered by the same A-IoT service request by the same core network for a previous paging) may determine whether to preferentially transmit (or avoid transmitting) a response based on the information/identifier for a (subsequent) paging message received. For example, the information/identifier may be set to 2 bits combining a bit for distinguishing information for indicating the purpose of the A-IoT service described above and a 1-bit value indicated by changing in a toggle (On/Off) manner when a new A-IoT service request distinct from a previous A-IoT service request is indicated for the AIoT device at the AIoT RAN/reader. Alternatively, the information/identifier may be set to 3 bits combining a bit for distinguishing information for indicating the purpose of the A-IoT service described above and a value within 3 bits (e.g., 2 bits) indicated by incrementing the value by 1 to distinguish it when a new A-IoT service request distinct from a previous A-IoT service request is indicated for the AIoT device at the AIoT RAN/reader. Alternatively, the information/identifier may be set to 2 bits/3 bits combining a bit for distinguishing information for indicating the purpose of the A-IoT service described above and a 1-bit/2-bit value which is initialized (e.g., to 0) when the AIoT RAN/reader first transmits the paging MAC PDU associated with the A-IoT service request of the core network, and thereafter becomes 1 (or incremented by 1) when retransmitting the paging MAC PDU associated with the A-IoT service request of the core network.

As another example, a MAC layer/entity may determine whether to skip transmission of a response for a paging message based on at least one of information received by a device from a NAS layer/entity and information determined/assigned/generated by an AIoT RAN/reader and included in/indicated by a paging message (or a paging MAC PDU or a paging MAC header).

As another example, a duplicate avoidance processing operation may be performed considering whether an AIoT device has (previously) transmitted a successful response/feedback for an AIoT paging (or a paging MAC PDU) to an AIoT RAN/reader.

An AIoT device receives an AIoT paging (or a paging MAC PDU) associated with one A-IoT service request requested from one core network from an AIoT RAN/reader, and may check/determine whether there is a match for device identification information (or whether it is a device which should respond to the paging) by utilizing information for identifying an AIoT device included in the paging message (or the paging MAC PDU) and information for identifying an AIoT device pre-configured/indicated/set/assigned/configured in the AIoT device. Through this, a device which should respond to the paging may transmit a response message for the paging (e.g., A-IoT MSG1, D2R data transmission) to an AIoT RAN/reader.

If a contention-based random access type is selected, an A-IoT MSG1 may be transmitted. If a contention-free random access type is selected, a D2R data transmission may be performed. For example, at least one of a D2R upper layer (e.g., A-IoT NAS or A-IoT data/application) response (or an acknowledgement MAC PDU or acknowledgement indication information on a PDRCH) for paging and D2R data for paging may be transmitted.

If an AIoT device selects a contention-based random access type and transmits an A-IoT MSG1, the AIoT device may receive an MSG2 from an AIoT RAN/reader. The AIoT device may perform a contention resolution operation through information included in the MSG2. If the AIoT device considers that the contention resolution is successful, it may distinguish and handle a subsequently received paging associated with the A-IoT service request requested from the core network which triggers the MSG1 transmission and/or a subsequent paging by another A-IoT service request different from the A-IoT service request requested from the core network which triggers the MSG1 transmission (if data transmission/reception is available/possible in the AIoT device, or in a state where stored energy exceeds a certain level).

If an AIoT device receives an A-IoT paging (or a paging MAC PDU) associated with one A-IoT service request requested from one core network from an AIoT RAN/reader and transmits an A-IoT MSG1, the AIoT device may monitor a corresponding PRDCH to receive a response/acknowledgement/success/failure thereto. An AIoT device may initialize (to failure) and store a device variable for whether contention resolution is successful.

An operation for limiting a time from A-IoT MSG1 transmission to A-IoT MSG2 reception in an AIoT device may be performed to limit energy consumption. For example, an AIoT device may start a corresponding timer after transmitting an A-IoT MSG1. When the timer expires, it may be considered that MSG2 reception has failed. Alternatively, PRDCH monitoring may be limited to within a certain time/duration/timing/slot/subframe/time unit after A-IoT MSG1 transmission. The timer, time/duration/timing/slot/subframe/time unit may be pre-configured in an AIoT device. Alternatively, it may be configured/indicated by an AIoT RAN/reader and/or an AIoTF. For convenience of description, this is denoted as an MSG2 reception timer hereinafter. This is for convenience of description only and may be replaced with any other name such as MSG2 timer, window, duration, etc.

If an AIoT device receives an A-IoT paging message associated with the A-IoT service request requested from the core network after transmitting anA-IoT MSG1 and before receiving an A-IoT MSG2 (or before an MSG2 timer expires), the AIoT device may consider it as a duplicate and skip A-IoT MSG1 transmission for it (or ignore reception of the paging message). An AIoT device may store information for distinguishing and handling the A-IoT service request requested from the core network (or paging associated with the A-IoT service request requested from the core network) as a device variable. An AIoT device may store information for identifying/distinguishing one A-IoT service request/trigger requested from one core network (or one or more pieces of information among information for distinguishing an A-IoT service request and/or an attribute of the A-IoT service request and/or information/an identifier for an AIoT RAN(s)/Reader(s) to determine whether to skip transmission of a response for a paging message in the AIoT device) as a device variable. An AIoT device may store information/an identifier assigned/set/generated for the AIoT device to determine whether to skip transmission of a response for a paging message based on information for identifying/distinguishing one A-IoT service request/trigger requested from one core network received from an AIoT RAN/reader from a core network as a device variable.

If an AIoT device receives an A-IoT paging message different from an A-IoT paging associated with the A-IoT service request requested from the core network after transmitting an A-IoT MSG1 and before receiving an A-IoT MSG2 (or before an MSG2 timer expires) (e.g., an A-IoT paging associated with a new A-IoT service request different from the A-IoT service request requested from the core network), the AIoT device may transmit an A-IoT MSG1. An AIoT device may store information for distinguishing and handling the A-IoT service request requested from the core network (or paging associated with the A-IoT service request requested from the core network) as a device variable. An AIoT device may store information for identifying/distinguishing one A-IoT service request/trigger requested from one core network (or one or more pieces of information among information for distinguishing an A-IoT service request and/or an attribute of the A-IoT service request and/or information/an identifier for an AIoT RAN(s)/Reader(s) to determine whether to skip transmission of a response for a paging message in the AIoT device) as a device variable. An AIoT device may store information/an identifier assigned/set/generated for the AIoT device to determine whether to skip transmission of a response for a paging message based on information for identifying/distinguishing one A-IoT service request/trigger requested from one core network received from an AIoT RAN/reader from a core network as a device variable.

If an AIoT device receives an A-IoT MSG2 (e.g., if an AIoT device receives an A-IoT MSG2 including the same random ID as a random ID it previously transmitted in an A-IoT MSG1, or if an AIoT device receives an A-IoT MSG2 including the same random ID as a random ID it previously transmitted in an A-IoT MSG1 before an MSG2 reception timer expires), the AIoT device may perform at least one of the following operations. The order of the following operations is an example, and they may be performed in any order different from the following order.

The AIoT device may consider that the contention resolution is successful.

The AIoT device may set a device variable for whether contention resolution is successful to success and store it.

The AIoT device may store a random ID.

If an AIoT device receives an A-IoT paging (or a paging MAC PDU) associated with one A-IoT service request requested from one core network from an AIoT RAN/reader, it may check whether the paging is a duplicate based on information included in the paging message (or the paging MAC PDU or the paging MAC header or a NAS container/message included in the paging PDU) and a device variable. For example, it may be considered as a duplicate paging if information transmitted by an AIoT RAN/reader included in a paging message (or a paging MAC PDU or a paging MAC header) has the same value as a stored/set device variable and/or a device variable for whether the same contention resolution is successful is stored as success, by utilizing at least one of information(s)/identifier(s) associated with one A-IoT service request received from a core network (or information for identifying/distinguishing one A-IoT service request/trigger requested from one core network) and information/an identifier assigned/set/generated by an AIoT RAN/reader for determining whether to skip transmission of a response for the paging message.

If an AIoT device has received an A-IoT MSG2 (or has successfully received an A-IoT MSG2, or if contention resolution is considered successful), and receives a duplicate paging message associated with one A-IoT service request/trigger requested from one core network, it may skip a response for the paging. The AIoT device may discard/delete/remove the corresponding paging message (or paging MAC PDU). The AIoT device may terminate the corresponding paging message reception procedure.

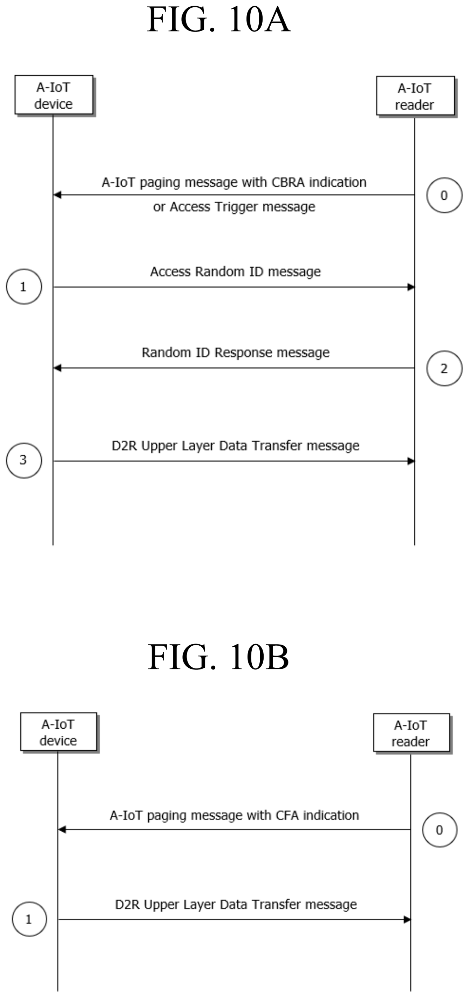

**FIGS. 10A to 10B** **illustrate A-IoT access procedures to which one embodiment of the present specification may be applied.**

The main services and functions of the A-IoT MAC layer are as follows:
- Paging;
- Access;
- Transfer of upper layer data;
- Construct MAC PDUs to be mapped onto D2R transport blocks and delivered to the physical layer;
- MAC padding;
- D2R segmentation;
- Process MAC PDUs from R2D transport blocks delivered from the physical layer;
- Failure detection.

### A-IoT Paging

A-IoT paging allows an A-IoT reader to trigger A-IoT CBRA or A-IoT CFA for one, multiple, or all A-IoT devices. The A-IoT paging message is transmitted on the PRDCH. An A-IoT paging message may include zero or one paging identifier. The paging identifier can be an A-IoT Device Permanent Identifier or filtering information. If the paging identifier is included, the paging message is transmitted to a specific A-IoT device or a group of A-IoT devices. If the paging identifier is not included, the paging message is transmitted to all A-IoT devices. Additionally, the A-IoT paging message provides configuration for the A-IoT access procedure.

### A-IoT Access Procedure

For A-IoT access, both an A-IoT contention-based random access (CBRA) procedure and an A-IoT contention-free access (CFA) procedure are supported. When an A-IoT device is paged, the A-IoT device initiates either the A-IoT CBRA procedure or the A-IoT CFA procedure according to an explicit instruction included in an A-IoT paging message.

In the case of CBRA (FIG. 10A), the A-IoT device randomly selects one access occasion among access occasions configured in the A-IoT paging message. In order to determine the start of the selected access occasion, the device may monitor an Access Trigger message, and transmit an A-IoT MSG1 (Access Random ID message) in the selected access occasion. The start of a first A-IoT MSG1 resource set is directly indicated by the A-IoT paging message instead of the Access Trigger message.

After transmitting the A-IoT MSG1, the device monitors an A-IoT MSG2 (Random ID Response message) until a configured number of Access Trigger messages or a subsequent A-IoT paging message is received. That is, any A-IoT MSG2 received thereafter is not processed.

When the A-IoT MSG2 includes a frequency index (if present) matching the frequency index used for the MSG1 transmission and includes the same Random ID as transmitted in the MSG1, the device considers that contention resolution is successful. Otherwise, the device considers that contention resolution has failed. When the contention resolution is successful, the device transmits a D2R Upper Layer Data Transfer message using resources provided in the A-IoT MSG2. When the contention resolution fails, if an A-IoT paging message having the same transaction ID is received, the device performs re-access.

In the case of CFA (FIG. 10B), the A-IoT device transmits the D2R Upper Layer Data Transfer message using a dedicated resource provided in the A-IoT paging message. In this case, monitoring of the Access Trigger message is not required.

According to an embodiment, a device in a wireless communication system transmits an ambient internet of things (A-IoT) message1 in a random access procedure and receives a first A-IoT message 2 in the random access procedure in response to the A-IoT message1. Further, after receiving the first A-IoT message 2, the device transmits a device to reader (D2R) message including upper layer data in the random access procedure. When a second A-IoT message 2that is separate from the first A-IoT message 2 is received, retransmission of the D2R message may be performed.

After receiving the first A-IoT message 2, the device may store an access stratum Identifier (AS ID), and the first A-IoT message 2 may include the AS ID.

Meanwhile, the second A-IoT message 2 may include an AS ID identical to the stored AS ID. That is, when the second A-IoT message 2 including the AS ID identical to the stored AS ID is received, retransmission of the D2R message may be performed.

In addition, the second A-IoT message 2 may include a 16-bit random identifier, D2R scheduling information, an access stratum identifier (AS ID), and information indicating whether the AS ID is included.

As one example, when the above-described features are applied, the second A-IoT message2 may indicate a reception failure of the transmitted D2R message.

Before transmitting the A-IoT message1, the device may receive a paging message in the random access procedure, and the paging message may include 1-bit information indicating contention-based random access. Further, the paging message may further include information indicating whether a security parameter is included.

The embodiments described up to now may be implemented through various means. For example, the embodiments may be implemented by hardware, firmware, software, or a combination thereof. Details will be described with reference to the accompanying drawings.

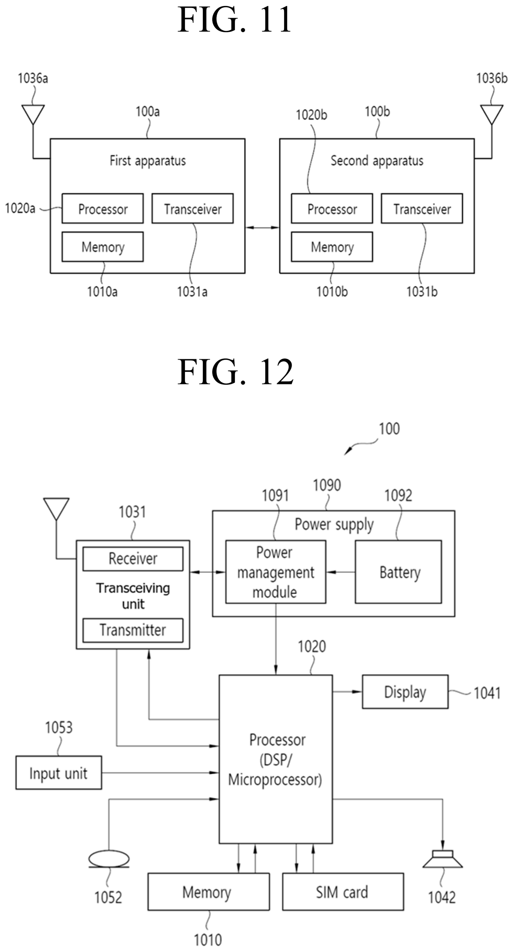

**FIG. 11** **is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12** **is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some constituent elements are referred to as a unit in the disclosure. However, the embodiments are not limited thereto. For example, such term "unit" may also refer to a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and conveys the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

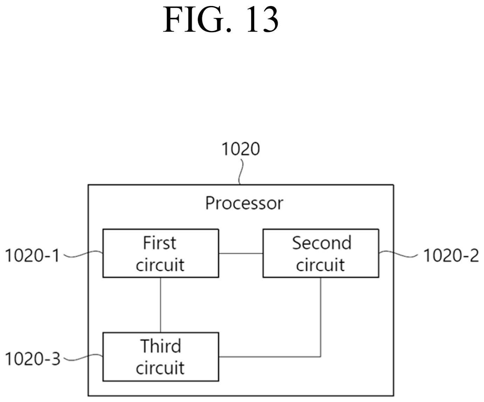

**FIG. 13** **is a block diagram of a processor in accordance with an embodiment.**

Referring to FIG. 13, a processor 1020 may include a plurality of circuitry to implement the proposed functions, procedures, and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

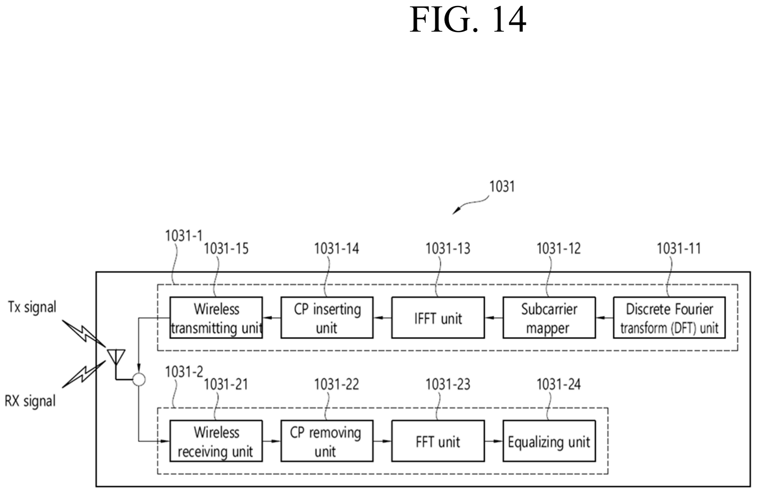

FIG. **14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" may also refer to a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, data communication of a device that provides ultra-low complexity and ultra-low power operation in a wireless communication system may be effectively controlled.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for transmitting and receiving data of a device in a wireless communication system, the method comprising:
transmitting an ambient internet of things (A-IoT) message 1 in a random access procedure;
receiving a first A-IoT message 2 in the random access procedure in response to the A-IoT message 1; and
after receiving the first A-IoT message 2, transmitting a device to reader (D2R) message including upper layer data in the random access procedure,
wherein, when a second A-IoT message 2 that is separate from the first A-IoT message 2 is received, the D2R message is retransmitted.

2. The method of claim 1, further comprising:
storing an access stratum identifier (AS ID) after receiving the first A-IoT message 2, wherein the first A-IoT message 2 includes the AS ID.

3. The method of claim 2, wherein the second A-IoT message 2 includes an AS ID identical to the stored AS ID.

4. The method of claim 1, wherein the second A-IoT message 2 includes a 16-bit random identifier (ID), D2R scheduling information, an access stratum identifier (AS ID), and information indicating whether the AS ID is included.

5. The method of claim 1, further comprising:
receiving a paging message in the random access procedure before transmitting the A-IoT message 1,
wherein the paging message includes 1-bit information indicating contention-based random access.

6. The method of claim 5, wherein the paging message further includes information indicating whether a security parameter is included.

7. The method of claim 1, wherein the second A-IoT message 2 indicates a reception failure of the transmitted D2R message.

8. A device in a wireless communication system, comprising:
at least one processor; and
at least one memory configured to store instructions and operably electrically connectable to the at least one processor,
wherein operations performed based on the instructions executed by the at least one processor comprise:
transmitting an ambient internet of things (A-IoT) message 1 in a random access procedure;
receiving a first A-IoT message 2 in the random access procedure in response to the A-IoT message 1; and
after receiving the first A-IoT message 2, transmitting a device to reader (D2R) message including upper layer data in the random access procedure,
wherein, when a second A-IoT message 2 that is separate from the first A-IoT message 2 is received, the D2R message is retransmitted.

9. The device of claim 8, wherein operations performed based on the instructions executed by the at least one processor further comprise:
storing an access stratum identifier (AS ID) after receiving the first A-IoT message 2, wherein the first A-IoT message 2 includes the AS ID.

10. The device of claim 9, wherein the second A-IoT message 2 includes an AS ID identical to the stored AS ID.

11. The device of claim 8, wherein the second A-IoT message 2 includes a 16-bit random identifier (ID), D2R scheduling information, an access stratum identifier (AS ID), and information indicating whether the AS ID is included.

12. The device of claim 8, wherein operations performed based on the instructions executed by the at least one processor further comprise:
receiving a paging message in the random access procedure before transmitting the A-IoT message 1,
wherein the paging message includes 1-bit information indicating contention-based random access.

13. The device of claim 12, wherein the paging message further includes information indicating whether a security parameter is included.

14. The device of claim 8, wherein the second A-IoT message 2 indicates a reception failure of the transmitted D2R message.
